# EUROPEAN PATENT APPLICATION

(11) **EP 4 369 825 A1**
(43) Date of publication of application: **15.05.2024**
(21) Application number: 22852230.6
(22) Date of filing: 03.08.2022
(51) Int. Cl.: H04W 72/04, H04W 72/12

(54) **COMMUNICATION METHOD AND COMMUNICATION APPARATUS**

(30) Priority: 06.08.2021 CN 202110904525
(71) Applicant: Huawei Technologies Co., Ltd., Shenzhen, Guangdong 518129 (CN)
(72) Inventor: YUAN, Shitong, Shenzhen, Guangdong 518129 (CN); LIU, Fengwei, Shenzhen, Guangdong 518129 (CN); SONG, Xinghua, Shenzhen, Guangdong 518129 (CN)
(74) Representative: Epping - Hermann - Fischer
(86) International application number: PCT/CN2022/109930
(87) International publication number: WO 2023/011518

(57) **Abstract**

This application provides a communication method and apparatus, so that a parent node flexibly indicates, to a first integrated access and backhaul (integrated access and backhaul, IAB) node based on first indication information, resource multiplexing parameters of a distributed unit (distributed unit, DU) and a mobile terminal (mobile terminal, MT) in the first IAB node during resource multiplexing, to better enable resource multiplexing transmission and improve resource utilization. In the method, the first IAB node receives the first indication information from the parent node, where the first IAB node includes the distributed unit DU and the mobile terminal MT, and the first indication information indicates a first parameter of the DU and the MT during resource multiplexing. The first IAB node transmits data based on the first parameter.

## Description

This application claims priority to Chinese Patent Application No. 202110904525.8, filed with the China National Intellectual Property Administration on August 6, 2021 and entitled "COMMUNICATION METHOD AND COMMUNICATION APPARATUS", which is incorporated herein by reference in its entirety.

### TECHNICAL FIELD

This application relates to the field of wireless technologies, and in particular, to a communication method and a communication apparatus.

### BACKGROUND

With continuous development of mobile communication technologies, spectrum resources are increasingly limited. To improve spectrum utilization, base stations are deployed more densely. In a conventional cellular network architecture, a base station establishes a connection to a core network through an optical fiber. A wireless relay node (relay node, RN) establishes a connection to the core network through a wireless backhaul link, to save some optical fiber deployment costs. Currently, in-band relay is a relay solution in which a backhaul link and an access link share a same band. Because no additional spectrum resource is used, the in-band relay has advantages such as high spectral efficiency and low deployment costs. An in-band relay solution of new radio (new radio, NR) may be referred to as integrated access and backhaul (integrated access and backhaul, IAB), and a relay node may be referred to as an IAB node (IAB node).

The IAB node may include two function units: a mobile terminal (mobile terminal, MT) and a distributed unit (distributed unit, DU). The MT is used by the IAB node to communicate with a parent node, and the DU is used by the IAB node to communicate with a child node. In addition, the IAB node may improve flexibility and resource utilization by using a resource multiplexing working mode. In other words, the MT and the DU use resources that do not overlap, and transmit data on corresponding resources.

However, because communication parameters such as on/off time, transmission distances, and signal transmit/receive powers of power amplifiers of different IAB nodes may be different, resource multiplexing parameters used by the different IAB nodes may be different in a resource multiplexing working mode. Therefore, how to enable the IAB node to determine the resource multiplexing parameter is an urgent technical problem to be resolved.

### SUMMARY

This application provides a communication method and apparatus, so that a parent node flexibly indicates, to a first IAB node based on first indication information, resource multiplexing parameters of a DU and an MT in the first IAB node during resource multiplexing, to better enable resource multiplexing transmission and improve resource utilization.

According to a first aspect of this application, a communication method is provided. The method is performed by a first IAB node, or the method is performed by some components (for example, a processor, a chip, or a chip system) of the first IAB node, or the method may be implemented by a logical module or software that can implement all or some functions of the first IAB node. In the first aspect and the possible implementations of the first aspect, an example in which the communication method is performed by the first IAB node is used for description. In the method, the first IAB node receives first indication information from a parent node, where the first IAB node includes a distributed unit DU and a mobile terminal MT, and the first indication information indicates a first parameter of the DU and the MT during resource multiplexing. The first IAB node transmits data based on the first parameter.

It should be noted that, a process in which the first IAB node transmits data based on the first parameter may include: The first IAB node transmits uplink data (including an uplink signal, uplink information, uplink signaling, and the like) based on the first parameter; and/or a process in which the first IAB node transmits data based on the first parameter may include: The first IAB node transmits downlink data (including a downlink signal, downlink information, downlink signaling, and the like) based on the first parameter.

According to the foregoing technical solution, the first IAB node includes the DU and the MT, and the first indication information received by the first IAB node from the parent node indicates the first parameter of the DU and the MT during resource multiplexing, so that the first IAB node determines the first parameter based on the first indication information. Then, the first IAB node transmits data based on the first parameter indicated when the DU and the MT perform resource multiplexing. The first parameter may be a resource multiplexing parameter (or referred to as a resource multiplexing condition, resource multiplexing capability information, or the like) of the DU and the MT in the first IAB node during resource multiplexing, so that the parent node flexibly indicates the resource multiplexing parameter to the first IAB node based on the first indication information, to better enable resource multiplexing transmission and improve resource utilization. Optionally, in this embodiment and subsequent embodiments, during resource multiplexing of the DU and the MT may be represented as during resource multiplexing of a frequency domain resource (for example, the frequency domain resource is at least one of a CC, a cell, or an RB set of a cell) corresponding to the DU and a frequency domain resource (for example, the frequency domain resource is at least one of a CC, a cell, or an RB set of a cell) corresponding to the MT. In a possible implementation of the first aspect, a process in which the first IAB node transmits data based on the first parameter specifically includes: The first IAB node transmits data based on the first parameter in a first transmission mode. The first transmission mode is a transmission mode in which data transmission of the DU and the MT is based on resource multiplexing.

Optionally, in this embodiment and subsequent embodiments, the first transmission mode is a transmission mode in which data transmission of the DU and the MT is based on resource multiplexing, or may be expressed as a transmission mode in which data transmission on a frequency domain resource (for example, the frequency domain resource is at least one of a CC, a cell, or an RB set of a cell) corresponding to the DU and a frequency domain resource (for example, the frequency domain resource is at least one of a CC, a cell, or an RB set of a cell) corresponding to the MT is based on resource multiplexing. Optionally, the first transmission mode includes at least one of the following: The DU and the MT simultaneously receive data (DU_RX/MT_RX), the DU and the MT simultaneously send data (DU_TX/MT_TX), the DU receives data and the MT sends data (DU_RX/MT_TX), the MT receives data and the DU sends data (DU_TX/MT_RX), the MT and the DU perform space division sending, the MT and the DU perform space division receiving, and the MT and the DU perform full duplex.

According to the foregoing technical solution, after the first IAB node receives, from the parent node, the first parameter indicated when the DU and the MT perform resource multiplexing, the first IAB node may perform resource multiplexing transmission based on the first parameter. That is, the first IAB node transmits data based on the first parameter in the first transmission mode, and the first transmission mode is a transmission mode in which data transmission of the DU and the MT is based on resource multiplexing.

In a possible implementation of the first aspect, a process in which the first IAB node transmits data based on the first parameter specifically includes: The first IAB node transmits data based on the first parameter in a second transmission mode. The second transmission mode is a transmission mode in which data transmission of the DU and the MT is not based on resource multiplexing. Optionally, in this embodiment and subsequent embodiments, the second transmission mode is a transmission mode in which data transmission of the DU and the MT is not based on resource multiplexing. Alternatively, the second transmission mode may be represented as a transmission mode in which data transmission of the DU and the MT is based on time division multiplexing. Alternatively, the second transmission mode may be represented as a transmission mode in which the MT sends and receives data and the DU does not send or receive data on a same time domain resource. Alternatively, the second transmission mode is a transmission mode in which the DU sends and receives data and the MT does not send or receive data on a same time domain resource. Optionally, in this embodiment and subsequent embodiments, the second transmission mode is different from the first transmission mode.

According to the foregoing technical solution, after the first IAB node receives, from the parent node, the first parameter indicated when the DU and the MT perform resource multiplexing, the first IAB node may perform non-resource multiplexing transmission based on the first parameter. That is, the first IAB node transmits data based on the first parameter in the second transmission mode, and the second transmission mode is a transmission mode in which data transmission of the DU and the MT is not based on resource multiplexing.

In a possible implementation of the first aspect, before the first IAB node transmits data based on the first parameter, the first IAB node may further determine whether the first parameter meets a preset condition; and if yes, the first IAB node transmits data based on the first parameter in the first transmission mode; or if no, the first IAB node transmits data based on the first parameter in the second transmission mode.

Optionally, that the first IAB node determines whether the first parameter meets a preset condition may include: The first IAB node determines whether a device capability (for example, a resource multiplexing capability during time division multiplexing or a resource multiplexing capability during frequency division multiplexing) of the first IAB node supports to perform resource multiplexing based on the first parameter; and if yes, the first IAB node transmits data based on the first parameter in the first transmission mode; or if no, the first IAB node transmits data based on the first parameter in the second transmission mode. Alternatively, that the first IAB node determines whether the first parameter meets a preset condition may include: The first IAB node determines, whether a threshold of a communication requirement parameter (for example, a channel occupancy ratio (channel occupancy ratio, CR), a channel busy ratio (channel busy ratio, CBR), a reference signal received power (reference signal received power, RSRP), a received signal strength indicator (received signal strength indicator, RSSI), a transmission delay, or transmission reliability) is met when resource multiplexing is performed based on the first parameter; and if yes, the first IAB node transmits data based on the first parameter in the first transmission mode; or if no, the first IAB node transmits data based on the first parameter in the second transmission mode.

In a possible implementation of the first aspect, the method further includes: The first IAB node sends second indication information to the parent node. The second indication information indicates that data transmission of the DU and the MT is not based on resource multiplexing.

According to the foregoing technical solution, when the first IAB node determines that the first parameter does not meet the preset condition, the first IAB node may further transmit data based on the first parameter in the second transmission mode. In addition, the first IAB node may further send, to the parent node, the second indication information that indicates that data transmission of the DU and the MT is not based on resource multiplexing, so that the parent node determines a data transmission mode of the first IAB node.

In a possible implementation of the first aspect, before the first IAB node receives the first indication information from the parent node, the method further includes: The first IAB node sends third indication information to the parent node. The third indication information indicates at least one parameter required by the DU and the MT when a resource multiplexing mode is a first resource multiplexing mode.

It should be noted that the at least one required parameter may be expressed as at least one expected parameter, or expressed as at least one requested parameter, or expressed as at least one supported parameter.

According to the foregoing technical solution, before the first IAB node receives, from the parent node, the first indication information that indicates the first parameter of the DU and the MT during resource multiplexing, the first IAB node may further send, to the parent node, the third indication information that indicates at least one parameter required by the DU and the MT when the resource multiplexing mode is the first resource multiplexing mode. In this way, the parent node determines at least one parameter required by the first IAB when the resource multiplexing mode of the DU and the MT is the first resource multiplexing mode.

Optionally, when determining the first parameter, the parent node may use the at least one parameter as one of determining bases for determining the first parameter.

In a possible implementation of the first aspect, the at least one parameter includes the first parameter.

According to the foregoing technical solution, the at least one parameter indicated by the third indication information may include the first parameter indicated by the first indication information. The at least one parameter is a parameter required by the DU and the MT in the first IAB node when the resource multiplexing mode is the first resource multiplexing mode. The first parameter is a first parameter that is indicated by the parent node to the first IAB node and that is of the DU and the MT in the first IAB node during resource multiplexing. That is, the parent node may select a part or all of the at least one parameter reported by the first IAB node as the first parameter, so that the first parameter indicated by the parent node is a part or all of parameters required by the first IAB node, and the parent node can flexibly indicate (or adjust) first parameters of one or more first IAB nodes.

In a possible implementation of the first aspect, the at least one parameter is different from the first parameter.

According to the foregoing technical solution, the at least one parameter indicated by the third indication information may be different from the first parameter indicated by the first indication information. The at least one parameter is a parameter required by the DU and the MT in the first IAB node when the resource multiplexing mode is the first resource multiplexing mode. The first parameter is a first parameter that is indicated by the parent node to the first IAB node and that is of the DU and the MT in the first IAB node during resource multiplexing. That is, the at least one parameter reported by the first IAB node is different from the first parameter indicated by the parent node, so that the parent node can flexibly indicate (or adjust) first parameters of one or more first IAB nodes.

In a possible implementation of the first aspect, the first parameter is a corresponding parameter when the DU and the MT perform resource multiplexing and a resource multiplexing mode is a second resource multiplexing mode, and the first resource multiplexing mode is different from the second resource multiplexing mode.

According to the foregoing technical solution, the at least one parameter indicated by the third indication information sent by the first IAB node is a parameter corresponding to the first resource multiplexing mode, and the first parameter indicated by the first indication information sent by the parent node is a parameter corresponding to the second resource multiplexing mode. That is, a resource multiplexing mode corresponding to the at least one parameter reported by the first IAB node is different from a resource multiplexing mode corresponding to the first parameter indicated by the parent node, so that the parent node can flexibly indicate (or adjust) resource multiplexing modes of one or more first IAB nodes.

In a possible implementation of the first aspect, the first parameter is a corresponding parameter when the DU and the MT perform resource multiplexing and a resource multiplexing mode is the first resource multiplexing mode.

According to the foregoing technical solution, the at least one parameter indicated by the third indication information sent by the first IAB node is a parameter corresponding to the first resource multiplexing mode, and the first parameter indicated by the first indication information sent by the parent node is also a parameter corresponding to the first resource multiplexing mode. That is, a resource multiplexing mode corresponding to the at least one parameter reported by the first IAB node is the same as a resource multiplexing mode corresponding to the first parameter indicated by the parent node, so that the resource multiplexing mode indicated by the parent node is a resource multiplexing mode corresponding to the parameter required by the first IAB node, and the parent node can flexibly indicate (or adjust) resource multiplexing modes of one or more first IAB nodes.

In a possible implementation of the first aspect, before the first IAB node sends the third indication information to the parent node, the method further includes: The first IAB node receives first request information from the parent node. The first request information is used to request capability information of the DU and the MT during resource multiplexing.

According to the foregoing technical solution, before sending the third indication information, the first IAB node may trigger, based on the first request information that is from the parent node and that is used to request the capability information of the DU and the MT during resource multiplexing, sending of the third indication information to the parent node, so that the at least one parameter is reported by the first IAB node based on the request information sent by the parent node.

In a possible implementation of the first aspect, before the first IAB node receives the first indication information from the parent node, the method further includes: The first IAB node sends fourth indication information to the parent node. The fourth indication information indicates that the first IAB node supports at least one resource multiplexing mode, and the at least one resource multiplexing mode includes the first resource multiplexing mode.

According to the foregoing technical solution, before the first IAB node receives the first indication information from the parent node, the first IAB node may further send, to the parent node, the fourth indication information that indicates that the first IAB node supports at least one resource multiplexing mode. In this way, the parent node determines, based on the fourth indication information reported by the one or more first IAB nodes, the resource multiplexing mode supported by the first IAB node.

Optionally, in a process of determining the first parameter in the first indication information, the parent node may use the fourth indication information as one of bases for determining the first parameter.

In a possible implementation of the first aspect, the first parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration indicator state identifier (transmission configuration indicator state ID, TCI state ID) or a sounding reference signal resource index (sounding reference signal resource index, SRI) corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal (demodulation reference signal, DMRS) ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

In a possible implementation of the first aspect, the at least one parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration indicator state identifier (transmission configuration indicator state ID, TCI state ID) or a sounding reference signal resource index (sounding reference signal resource index, SRI) corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal (demodulation reference signal, DMRS) ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

Optionally, in this embodiment and subsequent embodiments, the "quantity of data streams" may indicate a quantity of layers (layer), or the "quantity of data streams" may indicate a quantity of ranks (RANK).

Optionally, in this embodiment and subsequent embodiments, the downlink receive power information may include one or more of a downlink receive power range, a minimum downlink receive power, a maximum downlink receive power, a power spectral density (PSD) range, and an offset value of a power headroom (PHR).

Optionally, in this embodiment and subsequent embodiments, the "timing mode" is timing used for space division sending (or referred to as timing in case 6 (Case 6)), and/or the "timing mode" is timing used for space division receiving (or referred to as timing in case 7 (Case 7)).

In a possible implementation of the first aspect, after the first IAB node receives the first indication information from the parent node, the method further includes: The first IAB node receives fifth indication information from the parent node. The fifth indication information indicates the DU and the MT to transmit data in a third resource multiplexing mode.

The third resource multiplexing mode includes time division multiplexing of the DU and the MT; or the third resource multiplexing mode includes at least one of the following: The DU and the MT simultaneously receive data; or the DU and the MT simultaneously send data; or the DU receives data and the MT sends data; or the MT receives data and the DU sends data.

According to the foregoing technical solution, after the first IAB node receives the first indication information from the parent node, in a process in which the first IAB node transmits data based on the first parameter indicated by the first indication information, the parent node may send, to the first IAB node, the fifth indication information that indicates the DU and the MT to transmit data in the third resource multiplexing mode. Due to macro control or a change of a parameter such as communication quality or a communication requirement, the parent node may need to adjust the resource multiplexing mode of the first IAB node. Therefore, the parent node may indicate an adjustment result corresponding to the adjustment process by using the fifth indication information. In a possible implementation of the first aspect, after the first IAB node receives the first indication information from the parent node, the method further includes: The first IAB node sends sixth indication information to the parent node. The sixth indication information indicates the DU and the MT to transmit data in the third resource multiplexing mode.

The third resource multiplexing mode includes time division multiplexing of the DU and the MT; or the third resource multiplexing mode includes at least one of the following: The DU and the MT simultaneously receive data; or the DU and the MT simultaneously send data; or the DU receives data and the MT sends data; or the MT receives data and the DU sends data.

According to the foregoing technical solution, after the first IAB node receives the first indication information from the parent node, in a process in which the first IAB node transmits data based on the first parameter indicated by the first indication information, the first IAB node may send, to the parent node, the sixth indication information that indicates the DU and the MT to transmit data in the third resource multiplexing mode. Due to a change of a parameter such as communication quality or a communication requirement, the first IAB node may need to adjust the resource multiplexing mode of the first IAB node. Therefore, the first IAB node may indicate an adjustment result corresponding to the adjustment process by using the sixth indication information.

According to second aspect of this application, a communication method is provided. The method is performed by a parent node, or the method is performed by some components (for example, a processor, a chip, or a chip system) of the parent node, or the method may be implemented by a logical module or software that can implement all or some functions of the parent node. In the first aspect and the possible implementations of the first aspect, an example in which the communication method is performed by the parent node is used for description. In the method, the parent node determines first indication information, and the parent node sends the first indication information to a first integrated access and backhaul IAB node. The first IAB node includes a distributed unit DU and a mobile terminal MT, and the first indication information indicates a first parameter of the DU and the MT during resource multiplexing.

According to the foregoing technical solution, the first IAB node includes the DU and the MT, and the first indication information sent by the parent IAB node to the first IAB node indicates the first parameter of the DU and the MT during resource multiplexing, so that the first IAB node determines the first parameter based on the first indication information, and the first IAB node transmits data based on the first parameter indicated when the DU and the MT perform resource multiplexing. The first parameter may be a resource multiplexing parameter (or referred to as a resource multiplexing condition, resource multiplexing capability information, or the like) of the DU and the MT in the first IAB node during resource multiplexing, so that the parent node flexibly indicates the resource multiplexing parameter to the first IAB node based on the first indication information, to better enable resource multiplexing transmission and improve resource utilization. It should be noted that the parent node may be an intermediate node (or referred to as a relay node) between a donor (donor) node and the first IAB node, or the parent node may be a donor node. This is not limited herein.

In a possible implementation of the second aspect, the method further includes: The parent node receives second indication information from the first IAB node. The second indication information indicates that data transmission of the DU and the MT is not based on resource multiplexing. According to the foregoing technical solution, when the first IAB node determines that the first parameter does not meet a preset condition, the first IAB node may further transmit data based on the first parameter in a second transmission mode, and the second transmission mode is a transmission mode in which data transmission of the DU and the MT is not based on resource multiplexing. In addition, the first IAB node may further send, to the parent node, the second indication information that indicates that data transmission of the DU and the MT is not based on resource multiplexing, so that the parent node determines a data transmission mode of the first IAB node.

In a possible implementation of the second aspect, before the parent node determines the first indication information, the method further includes: The parent node receives third indication information from the first IAB node. The third indication information indicates at least one parameter required by the DU and the MT when a resource multiplexing mode is a first resource multiplexing mode.

It should be noted that the at least one required parameter may be expressed as at least one expected parameter, or expressed as at least one requested parameter, or expressed as at least one supported parameter.

According to the foregoing technical solution, before the first IAB node receives, from the parent node, the first indication information that indicates the first parameter of the DU and the MT during resource multiplexing, the first IAB node may further send, to the parent node, the third indication information that indicates at least one parameter required by the DU and the MT when the resource multiplexing mode is the first resource multiplexing mode. In this way, the parent node determines at least one parameter required by the first IAB when the resource multiplexing mode of the DU and the MT is the first resource multiplexing mode.

Optionally, when determining the first parameter, the parent node may use the at least one parameter as one of determining bases for determining the first parameter.

In a possible implementation of the second aspect, the at least one parameter includes the first parameter.

According to the foregoing technical solution, the at least one parameter indicated by the third indication information may include the first parameter indicated by the first indication information. The at least one parameter is a parameter required by the DU and the MT in the first IAB node when the resource multiplexing mode is the first resource multiplexing mode. The first parameter is a first parameter that is indicated by the parent node to the first IAB node and that is of the DU and the MT in the first IAB node during resource multiplexing. That is, the parent node may select a part or all of the at least one parameter reported by the first IAB node as the first parameter, so that the first parameter indicated by the parent node is a part or all of parameters required by the first IAB node, and the parent node can flexibly indicate (or adjust) first parameters of one or more first IAB nodes.

In a possible implementation of the second aspect, the at least one parameter is different from the first parameter.

According to the foregoing technical solution, the at least one parameter indicated by the third indication information may be different from the first parameter indicated by the first indication information. The at least one parameter is a parameter required by the DU and the MT in the first IAB node when the resource multiplexing mode is the first resource multiplexing mode. The first parameter is a first parameter that is indicated by the parent node to the first IAB node and that is of the DU and the MT in the first IAB node during resource multiplexing. That is, the at least one parameter reported by the first IAB node is different from the first parameter indicated by the parent node, so that the parent node can flexibly indicate (or adjust) first parameters of one or more first IAB nodes.

In a possible implementation of the second aspect, the first parameter is a corresponding parameter when the DU and the MT perform resource multiplexing and a resource multiplexing mode is a second resource multiplexing mode, and the first resource multiplexing mode is different from the second resource multiplexing mode.

According to the foregoing technical solution, the at least one parameter indicated by the third indication information sent by the first IAB node is a parameter corresponding to the first resource multiplexing mode, and the first parameter indicated by the first indication information sent by the parent node is a parameter corresponding to the second resource multiplexing mode. That is, a resource multiplexing mode corresponding to the at least one parameter reported by the first IAB node is different from a resource multiplexing mode corresponding to the first parameter indicated by the parent node, so that the parent node can flexibly indicate (or adjust) resource multiplexing modes of one or more first IAB nodes.

In a possible implementation of the second aspect, the first parameter is a corresponding parameter when the DU and the MT perform resource multiplexing and a resource multiplexing mode is the first resource multiplexing mode.

According to the foregoing technical solution, the at least one parameter indicated by the third indication information sent by the first IAB node is a parameter corresponding to the first resource multiplexing mode, and the first parameter indicated by the first indication information sent by the parent node is also a parameter corresponding to the first resource multiplexing mode. That is, a resource multiplexing mode corresponding to the at least one parameter reported by the first IAB node is the same as a resource multiplexing mode corresponding to the first parameter indicated by the parent node, so that the resource multiplexing mode indicated by the parent node is a resource multiplexing mode corresponding to the parameter required by the first IAB node, and the parent node can flexibly indicate (or adjust) resource multiplexing modes of one or more first IAB nodes.

In a possible implementation of the second aspect, before the first IAB node sends the third indication information to the parent node, the method further includes: The parent node sends first request information to the first IAB node. The first request information is used to request capability information of the DU and the MT during resource multiplexing.

According to the foregoing technical solution, before sending the third indication information, the first IAB node may trigger, based on the first request information that is from the parent node and that is used to request the capability information of the DU and the MT during resource multiplexing, sending of the third indication information to the parent node, so that the at least one parameter is reported by the first IAB node based on the request information sent by the parent node.

In a possible implementation of the second aspect, before the parent node sends the first indication information to the first IAB node, the method further includes: The parent node receives fourth indication information from the first IAB node. The fourth indication information indicates that the first IAB node supports at least one resource multiplexing mode, and the at least one resource multiplexing mode includes the first resource multiplexing mode.

According to the foregoing technical solution, before the first IAB node receives the first indication information from the parent node, the first IAB node may further send, to the parent node, the fourth indication information that indicates that the first IAB node supports at least one resource multiplexing mode. In this way, the parent node determines, based on the fourth indication information reported by the one or more first IAB nodes, the resource multiplexing mode supported by the first IAB node.

Optionally, in a process of determining the first parameter in the first indication information, the parent node may use the fourth indication information as one of bases for determining the first parameter.

In a possible implementation of the second aspect, the first parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration information state identifier TCI state ID or a sounding reference signal resource index SRI corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal DMRS ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

In a possible implementation of the second aspect, the at least one parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration indicator state identifier (transmission configuration indicator state ID, TCI state ID) or a sounding reference signal resource index (sounding reference signal resource index, SRI) corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal (demodulation reference signal, DMRS) ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

In a possible implementation of the second aspect, after the parent node sends the first indication information to the first IAB node, the method further includes: The parent node sends fifth indication information to the parent node. The fifth indication information indicates the DU and the MT to transmit data in a third resource multiplexing mode.

The third resource multiplexing mode includes time division multiplexing of the DU and the MT; or the third resource multiplexing mode includes at least one of the following: The DU and the MT simultaneously receive data; or the DU and the MT simultaneously send data; or the DU receives data and the MT sends data; or the MT receives data and the DU sends data.

According to the foregoing technical solution, after the first IAB node receives the first indication information from the parent node, in a process in which the first IAB node transmits data based on the first parameter indicated by the first indication information, the parent node may send, to the first IAB node, the fifth indication information that indicates the DU and the MT to transmit data in the third resource multiplexing mode. Due to macro control or a change of a parameter such as communication quality or a communication requirement, the parent node may need to adjust the resource multiplexing mode of the first IAB node. Therefore, the parent node may indicate an adjustment result corresponding to the adjustment process by using the fifth indication information. In a possible implementation of the second aspect, after the parent node sends the first indication information to the first IAB node, the method further includes: The parent node receives sixth indication information from the first IAB node. The sixth indication information indicates the DU and the MT to transmit data in a third resource multiplexing mode.

The third resource multiplexing mode includes time division multiplexing of the DU and the MT; or the third resource multiplexing mode includes at least one of the following: The DU and the MT simultaneously receive data; or the DU and the MT simultaneously send data; or the DU receives data and the MT sends data; or the MT receives data and the DU sends data.

According to the foregoing technical solution, after the first IAB node receives the first indication information from the parent node, in a process in which the first IAB node transmits data based on the first parameter indicated by the first indication information, the first IAB node may send, to the parent node, the sixth indication information that indicates the DU and the MT to transmit data in the third resource multiplexing mode. Due to a change of a parameter such as communication quality or a communication requirement, the first IAB node may need to adjust the resource multiplexing mode of the first IAB node. Therefore, the first IAB node may indicate an adjustment result corresponding to the adjustment process by using the sixth indication information.

According to a third aspect of this application, a communication method is provided. The method is performed by a first IAB node, or the method is performed by some components (for example, a processor, a chip, or a chip system) of the first IAB node, or the method may be implemented by a logical module or software that can implement all or some functions of the first IAB node. In the first aspect and the possible implementations of the first aspect, an example in which the communication method is performed by the first IAB node is used for description. In the method, the first IAB node determines a first time domain resource of a DU. The first IAB node includes the DU and an MT. When the first time domain resource does not include a resource of a first signal, the first IAB node determines a first frequency domain resource as an unavailable resource of the DU; or when the first time domain resource includes a resource of the first signal, the first IAB node determines the first frequency domain resource as an available resource of the DU.

According to the foregoing technical solution, after the first IAB node determines the first time domain resource of the DU, the first IAB node may determine, based on whether the first time domain resource includes the resource of the first signal, whether the first frequency domain resource is an available resource of the DU. The first signal is an important signal that needs to be transmitted (received or sent) by the DU, for example, a cell-level key signal, an important signal used for access, or an important signal used for channel measurement.

When the first time domain resource does not include the resource of the first signal, that is, when the first IAB determines that the first signal does not need to be transmitted on the first time domain resource, the first IAB node determines the first frequency domain resource as an unavailable resource of the DU. The first IAB does not need to reserve the first frequency domain resource for the DU to transmit the first signal, so that the DU does not occupy the first frequency domain resource, and a signal to be transmitted by the MT can be carried on the first frequency domain resource, or the signal to be transmitted by the MT is not interfered by (or does not conflict with) using the first frequency domain resource by the DU.

Alternatively, when the first time domain resource includes the resource of the first signal, that is, when the first IAB determines that the first signal needs to be transmitted on the first time domain resource, the first IAB node determines the first frequency domain resource as an available resource of the DU. The first IAB reserves the first frequency domain resource for the DU to transmit the first signal, so that the first signal can be carried on the first frequency domain resource, or transmission of the first signal is not interfered by (or does not conflict with) using the first frequency domain resource by the MT.

In a possible implementation of the third aspect, when the DU and the MT perform frequency division multiplexing on the first time domain resource, the first frequency domain resource is a guard band between a frequency domain resource of the DU and a frequency domain resource of the MT; or when the DU and the MT do not perform frequency division multiplexing on the first time domain resource, the first frequency domain resource is an available frequency domain resource corresponding to the first time domain resource.

According to the foregoing technical solution, when the DU and the MT in the first IAB node perform frequency division multiplexing on the first time domain resource, the first frequency domain resource needs to be reserved as a guard band between the frequency domain resource of the DU and the frequency domain resource of the MT, to avoid interference to (or conflict with) transmission of the MT or the DU. For example, when the first time domain resource is occupied by one of the DU and the MT, (a part or all) available frequency domain resources corresponding to the first time domain resource may be occupied by one of the DU and the MT, and impact on the other of the DU and the MT does not need to be considered.

In a possible implementation of the third aspect, that the first IAB node determines a first time domain resource of a DU includes: The first IAB node receives first indication information from a parent node. The first indication information indicates the first time domain resource of the DU. According to the foregoing technical solution, the first IAB node receives, from the parent node, the first indication information that indicates the first time domain resource of the DU, to determine the first time domain resource of the DU based on the first indication information. A specific implementation in which the first IAB node determines the first time domain resource of the DU is provided.

Optionally, the first IAB node may further receive frequency domain indication information from the parent node. The frequency domain indication information indicates that a part or all frequency domain resources corresponding to the first time domain resource are available resources of the DU.

Optionally, the first indication information and the frequency domain indication information are carried in a same message, or the first indication information and the frequency domain indication information are carried in different messages.

In a possible implementation of the third aspect, the method further includes: The first IAB node receives second indication information from the parent node. The second indication information indicates a bandwidth size of a guard band between a frequency domain resource of the DU and a frequency domain resource of the MT when the DU and the MT perform frequency division multiplexing on the first time domain resource.

According to the foregoing technical solution, the first IAB node may further receive, from the parent node, the bandwidth size of the guard band between the frequency domain resource of the DU and the frequency domain resource of the MT when the DU and the MT perform frequency division multiplexing on the first time domain resource. Therefore, when the DU and the MT perform frequency division multiplexing on the first time domain resource, the first IAB node determines a bandwidth size of the first frequency domain resource based on the bandwidth size of the guard band.

In a possible implementation of the third aspect, the guard band corresponds to a first resource multiplexing type, and the first resource multiplexing type includes at least one of the following:
an uplink frequency domain resource of the MT and an uplink resource of the DU are multiplexed;
an uplink frequency domain resource of the MT and a downlink resource of the DU are multiplexed;
a downlink frequency domain resource of the MT and an uplink resource of the DU are multiplexed; or
a downlink frequency domain resource of the MT and a downlink resource of the DU are multiplexed.

According to the foregoing technical solution, the guard band indicated by the second indication information may be a guard band corresponding to the at least one resource multiplexing type.

In a possible implementation of the third aspect, the first signal includes at least one of the following: a synchronization signal block, or referred to as a synchronization signal/broadcast signal block (synchronization signal/PBCH block, SS/PBCH block or SSB), a type 0-physical uplink control channel common search space (TypeO-PDCCH CSS) or a periodic channel state information reference signal (channel state information reference signal, CSI-RS) configured by a physical downlink control channel configured system information block 1 (pdcchConfigSIB 1) and carried on a physical downlink control channel (physical downlink control channel, PDCCH), and a signal, a scheduling request (scheduling request, SR), a synchronization signal block transmission configuration (SSB transmission configuration, STC), or remaining minimum system information (remaining minimum system information, RMSI) carried on a physical random access channel (physical random access channel, PRACH).

According to a fourth aspect of this application, a communication method is provided. The method is performed by a first IAB node, or the method is performed by some components (for example, a processor, a chip, or a chip system) of the first IAB node, or the method may be implemented by a logical module or software that can implement all or some functions of the first IAB node. In the first aspect and the possible implementations of the first aspect, an example in which the communication method is performed by the first IAB node is used for description. In the method, the first IAB node determines a second time domain resource of an MT. The first IAB node includes a DU and the MT. When the second time domain resource does not include a resource of a second signal, the first IAB node determines a second frequency domain resource as an unavailable resource of the MT; or when the second time domain resource includes a resource of the second signal, the first IAB node determines the second frequency domain resource as an available resource of the MT.

According to the foregoing technical solution, after the first IAB node determines the second time domain resource of the MT, the first IAB node may determine, based on whether the second time domain resource includes the resource of the second signal, whether the second frequency domain resource is an available resource of the MT. The second signal is an important signal that needs to be transmitted (received or sent) by the MT, for example, a cell-level key signal, an important signal used for access, or an important signal used for channel measurement.

When the second time domain resource does not include the resource of the second signal, that is, when the first IAB determines that the second signal does not need to be transmitted on the second time domain resource, the first IAB node determines the second frequency domain resource as an unavailable resource of the MT. The second IAB does not need to reserve the second frequency domain resource for the MT to transmit the second signal, so that the MT does not occupy the second frequency domain resource, and a signal to be transmitted by the DU can be carried on the second frequency domain resource, or the signal to be transmitted by the DU is not interfered by (or does not conflict with) using the second frequency domain resource by the MT.

Alternatively, when the second time domain resource includes the resource of the second signal, that is, when the first IAB determines that the second signal needs to be transmitted on the second time domain resource, the first IAB node determines the second frequency domain resource as an available resource of the MT. The first IAB reserves the second frequency domain resource for the MT to transmit the second signal, so that the second signal can be carried on the second frequency domain resource, or transmission of the second signal is not interfered by (or does not conflict with) using the second frequency domain resource by the DU.

In a possible implementation of the fourth aspect, when the DU and the MT perform frequency division multiplexing on the second time domain resource, the second frequency domain resource is a guard band between a frequency domain resource of the DU and a frequency domain resource of the MT; or when the DU and the MT do not perform frequency division multiplexing on the second time domain resource, the second frequency domain resource is an available frequency domain resource corresponding to the second time domain resource.

According to the foregoing technical solution, when the DU and the MT in the first IAB node perform frequency division multiplexing on the second time domain resource, the second frequency domain resource needs to be reserved as a guard band between the frequency domain resource of the DU and the frequency domain resource of the MT, to avoid interference to (or conflict with) transmission of the MT or the DU. For example, when the second time domain resource is occupied by one of the DU and the MT, (a part or all) available frequency domain resources corresponding to the second time domain resource may be occupied by one of the DU and the MT, and impact on the other of the DU and the MT does not need to be considered.

In a possible implementation of the fourth aspect, that the first IAB node determines a second time domain resource of an MT includes: The first IAB node receives first indication information from a parent node. The first indication information indicates the second time domain resource of the MT.

According to the foregoing technical solution, the first IAB node receives, from the parent node, the first indication information that indicates the second time domain resource of the MT, to determine the second time domain resource of the MT based on the first indication information. A specific implementation in which the first IAB node determines the second time domain resource of the MT is provided.

Optionally, the first IAB node may further receive frequency domain indication information from the parent node. The frequency domain indication information indicates that a part or all frequency domain resources corresponding to the second time domain resource are available resources of the MT.

Optionally, the first indication information and the frequency domain indication information are carried in a same message, or the first indication information and the frequency domain indication information are carried in different messages.

In a possible implementation of the fourth aspect, the method further includes: The first IAB node receives second indication information from the parent node. The second indication information indicates a bandwidth size of a guard band between a frequency domain resource of the DU and a frequency domain resource of the MT when the DU and the MT perform frequency division multiplexing on the second time domain resource.

According to the foregoing technical solution, the first IAB node may further receive, from the parent node, the bandwidth size of the guard band between the frequency domain resource of the DU and the frequency domain resource of the MT when the DU and the MT perform frequency division multiplexing on the second time domain resource. Therefore, when the DU and the MT perform frequency division multiplexing on the second time domain resource, the first IAB node determines a bandwidth size of the second frequency domain resource based on the bandwidth size of the guard band.

In a possible implementation of the fourth aspect, the guard band corresponds to a first resource multiplexing type, and the first resource multiplexing type includes at least one of the following:
an uplink frequency domain resource of the MT and an uplink resource of the DU are multiplexed;
an uplink frequency domain resource of the MT and a downlink resource of the DU are multiplexed;
a downlink frequency domain resource of the MT and an uplink resource of the DU are multiplexed; or
a downlink frequency domain resource of the MT and a downlink resource of the DU are multiplexed.

According to the foregoing technical solution, the guard band indicated by the second indication information may be a guard band corresponding to the at least one resource multiplexing type.

In a possible implementation of the fourth aspect, the second signal includes at least one of the following: an SSB, a Type0-PDCCH CSS or a periodic CSI-RS configured by a pdcchConfigSIB 1 and carried on a PDCCH, and a signal, an SR, an STC, or RMSI carried on a PRACH. According to a fifth aspect of this application, a communication apparatus is provided. The apparatus is a first IAB node, or the apparatus is a component (for example, a processor, a chip, or a chip system) in the first IAB node, or the apparatus may be a logical module or software that can implement all or a part of the first IAB node. The apparatus includes a processing unit and a transceiver unit.

The transceiver unit is configured to receive first indication information from a parent node. The first integrated backhaul and access IAB node includes a distributed unit DU and a mobile terminal MT, and the first indication information indicates a first parameter of the DU and the MT during resource multiplexing.

The processing unit is configured to determine the first parameter.

The transceiver unit is configured to transmit data based on the first parameter.

According to the foregoing technical solution, the first IAB node includes the DU and the MT, and the first indication information received by the transceiver unit from the parent node indicates the first parameter of the DU and the MT during resource multiplexing, so that the processing unit determines the first parameter based on the first indication information. Then, the transceiver unit transmits data based on the first parameter indicated when the DU and the MT perform resource multiplexing. The first parameter may be a resource multiplexing parameter (or referred to as a resource multiplexing condition, resource multiplexing capability information, or the like) of the DU and the MT in the first IAB node during resource multiplexing, so that the parent node flexibly indicates the resource multiplexing parameter to the first IAB node based on the first indication information, to better enable resource multiplexing transmission and improve resource utilization. In a possible implementation of the fifth aspect, that the transceiver unit is configured to transmit data based on the first parameter includes:
The transceiver unit is configured to transmit data based on the first parameter in a first transmission mode. The first transmission mode is a transmission mode in which data transmission of the DU and the MT is based on resource multiplexing.

In a possible implementation of the fifth aspect, that the transceiver unit is configured to transmit data based on the first parameter includes:
The transceiver unit is configured to transmit data based on the first parameter in a second transmission mode. The second transmission mode is a transmission mode in which data transmission of the DU and the MT is not based on resource multiplexing.

In a possible implementation of the fifth aspect, the transceiver unit is further configured to:
send second indication information to the parent node, where the second indication information indicates that data transmission of the DU and the MT is not based on resource multiplexing.

In a possible implementation of the fifth aspect,
the transceiver unit is further configured to send third indication information to the parent node. The third indication information indicates at least one parameter required by the DU and the MT when a resource multiplexing mode is a first resource multiplexing mode.

In a possible implementation of the fifth aspect, the at least one parameter includes the first parameter.

In a possible implementation of the fifth aspect, the at least one parameter is different from the first parameter.

In a possible implementation of the fifth aspect, the first parameter is a corresponding parameter when the DU and the MT perform resource multiplexing and a resource multiplexing mode is a second resource multiplexing mode, and the first resource multiplexing mode is different from the second resource multiplexing mode.

In a possible implementation of the fifth aspect, the first parameter is a corresponding parameter when the DU and the MT perform resource multiplexing and a resource multiplexing mode is the first resource multiplexing mode.

In a possible implementation of the fifth aspect,
the transceiver unit is further configured to receive first request information from the parent node. The first request information is used to request capability information of the DU and the MT during resource multiplexing.

In a possible implementation of the fifth aspect,
the transceiver unit is further configured to send fourth indication information to the parent node. The fourth indication information indicates that the first IAB node supports at least one resource multiplexing mode, and the at least one resource multiplexing mode includes the first resource multiplexing mode.

In a possible implementation of the fifth aspect, the first parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration information state identifier TCI state ID or a sounding reference signal resource index SRI corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal DMRS ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

In a possible implementation of the fifth aspect, the at least one parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration indicator state identifier (transmission configuration indicator state ID, TCI state ID) or a sounding reference signal resource index (sounding reference signal resource index, SRI) corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal (demodulation reference signal, DMRS) ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

In a possible implementation of the fifth aspect,
the transceiver unit is further configured to receive fifth indication information from the parent node. The fifth indication information indicates the DU and the MT to transmit data in a third resource multiplexing mode.

The third resource multiplexing mode includes time division multiplexing of the DU and the MT; or
the third resource multiplexing mode includes at least one of the following:
the DU and the MT simultaneously receive data;
the DU and the MT simultaneously send data;
the DU receives data and the MT sends data; or
the MT receives data and the DU sends data.

In a possible implementation of the fifth aspect,
the transceiver unit is further configured to send sixth indication information to the parent node. The sixth indication information indicates the DU and the MT to transmit data in a third resource multiplexing mode.

The third resource multiplexing mode includes time division multiplexing of the DU and the MT; or
the third resource multiplexing mode includes at least one of the following:
the DU and the MT simultaneously receive data;
the DU and the MT simultaneously send data;
the DU receives data and the MT sends data; or
the MT receives data and the DU sends data.

In the fifth aspect of embodiments of this application, composition modules of the communication apparatus may be further configured to perform the steps performed in the possible implementations of the first aspect. For details, refer to the first aspect. Details are not described herein again.

According to a sixth aspect of this application, a communication apparatus is provided. The apparatus is a parent node of a first IAB node, or the apparatus is a component (for example, a processor, a chip, or a chip system) in the parent node of the first IAB node, or the apparatus may be a logical module or software that can implement all or a part of the parent node of the first IAB node. The apparatus includes a processing unit and a transceiver unit.

The processing unit is configured to determine first indication information.

The transceiver unit is configured to send the first indication information to the first IAB node. The first IAB node includes a distributed unit DU and a mobile terminal MT, and the first indication information indicates a first parameter of the DU and the MT during resource multiplexing.

According to the foregoing technical solution, the first IAB node includes the DU and the MT, and the first indication information sent by the transceiver unit to the first IAB node indicates the first parameter of the DU and the MT during resource multiplexing, so that the first IAB node determines the first parameter based on the first indication information, and the first IAB node transmits data based on the first parameter indicated when the DU and the MT perform resource multiplexing. The first parameter may be a resource multiplexing parameter (or referred to as a resource multiplexing condition, resource multiplexing capability information, or the like) of the DU and the MT in the first IAB node during resource multiplexing, so that the parent node flexibly indicates the resource multiplexing parameter to the first IAB node based on the first indication information, to better enable resource multiplexing transmission and improve resource utilization. In a possible implementation of the sixth aspect,

the transceiver unit is further configured to receive second indication information from the first IAB node. The second indication information indicates that data transmission of the DU and the MT is not based on resource multiplexing.

In a possible implementation of the sixth aspect,
the transceiver unit is further configured to receive third indication information from the first IAB node. The third indication information indicates at least one parameter required by the DU and the MT when a resource multiplexing mode is a first resource multiplexing mode.

In a possible implementation of the sixth aspect, the at least one parameter includes the first parameter.

In a possible implementation of the sixth aspect, the at least one parameter is different from the first parameter.

In a possible implementation of the sixth aspect, the first parameter is a corresponding parameter when the DU and the MT perform resource multiplexing and a resource multiplexing mode is a second resource multiplexing mode, and the first resource multiplexing mode is different from the second resource multiplexing mode.

In a possible implementation of the sixth aspect, the first parameter is a corresponding parameter when the DU and the MT perform resource multiplexing and a resource multiplexing mode is the first resource multiplexing mode.

In a possible implementation of the sixth aspect,
the transceiver unit is further configured to send first request information to the first IAB node. The first request information is used to request capability information of the DU and the MT during resource multiplexing.

In a possible implementation of the sixth aspect,
the transceiver unit is further configured to receive fourth indication information from the first IAB node. The fourth indication information indicates that the first IAB node supports at least one resource multiplexing mode, and the at least one resource multiplexing mode includes the first resource multiplexing mode.

In a possible implementation of the sixth aspect, the first parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of symbols of a guard band between a time domain resource of the DU and a time domain resource of the MT when the DU and the MT perform frequency division multiplexing;
fifth information, indicating a transmission configuration information state identifier TCI state ID or a sounding reference signal resource index SRI corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal DMRS ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

In a possible implementation of the sixth aspect, the at least one parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration indicator state identifier (transmission configuration indicator state ID, TCI state ID) or a sounding reference signal resource index (sounding reference signal resource index, SRI) corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal (demodulation reference signal, DMRS) ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

In a possible implementation of the sixth aspect,
the transceiver unit is further configured to send fifth indication information to the parent node. The fifth indication information indicates the DU and the MT to transmit data in a third resource multiplexing mode.

The third resource multiplexing mode includes time division multiplexing of the DU and the MT; or
the third resource multiplexing mode includes at least one of the following:
the DU and the MT simultaneously receive data;
the DU and the MT simultaneously send data;
the DU receives data and the MT sends data; or
the MT receives data and the DU sends data.

In a possible implementation of the sixth aspect, after the parent node sends the first indication information to the first IAB node, the apparatus further includes:
The parent node receives fifth indication information from the first IAB node. The fifth indication information indicates the DU and the MT to transmit data in a third resource multiplexing mode.

The third resource multiplexing mode includes time division multiplexing of the DU and the MT; or
the third resource multiplexing mode includes at least one of the following:
the DU and the MT simultaneously receive data;
the DU and the MT simultaneously send data;
the DU receives data and the MT sends data; or
the MT receives data and the DU sends data.

In the sixth aspect of embodiments of this application, composition modules of the communication apparatus may be further configured to perform the steps performed in the possible implementations of the second aspect. For details, refer to the second aspect. Details are not described herein again.

According to a seventh aspect of this application, a communication apparatus is provided. The apparatus is a first IAB node, or the apparatus is a component (for example, a processor, a chip, or a chip system) in the first IAB node, or the apparatus may be a logical module or software that can implement all or a part of the first IAB node. The apparatus includes a processing unit and a transceiver unit.

The processing unit is configured to determine a first time domain resource of a DU. The first IAB node includes the DU and an MT.

When the first time domain resource does not include a resource of a first signal, the processing unit is configured to determine a first frequency domain resource as an unavailable resource of the DU; or
when the first time domain resource includes the resource of the first signal, the processing unit is configured to determine the first frequency domain resource as an available resource of the DU.

In a possible implementation of the seventh aspect,
when the DU and the MT perform frequency division multiplexing on the first time domain resource, the first frequency domain resource is a guard band between a frequency domain resource of the DU and a frequency domain resource of the MT; or
when the DU and the MT do not perform frequency division multiplexing on the first time domain resource, the first frequency domain resource is an available frequency domain resource corresponding to the first time domain resource.

In a possible implementation of the seventh aspect,
the processing unit is specifically configured to receive first indication information from a parent node by using the transceiver unit. The first indication information indicates the first time domain resource of the DU.

In a possible implementation of the seventh aspect,
the processing unit is specifically configured to receive second indication information from the parent node by using the transceiver unit. The second indication information indicates a bandwidth size of a guard band between a frequency domain resource of the DU and a frequency domain resource of the MT when the DU and the MT perform frequency division multiplexing on the first time domain resource.

In a possible implementation of the seventh aspect, the guard band corresponds to a first resource multiplexing type, and the first resource multiplexing type includes at least one of the following:
an uplink frequency domain resource of the MT and an uplink resource of the DU are multiplexed;
an uplink frequency domain resource of the MT and a downlink resource of the DU are multiplexed;
a downlink frequency domain resource of the MT and an uplink resource of the DU are multiplexed; or
a downlink frequency domain resource of the MT and a downlink resource of the DU are multiplexed.

In a possible implementation of the seventh aspect, the first signal includes at least one of the following:
a synchronization signal block (SS/PBCH, SSB), and a type 0-physical uplink control channel common search space (TypeO-PDCCH CSS) or a periodic channel state information reference signal (CSI-RS) configured by a physical downlink control channel configured system information block 1 (pdcchConfigSIB 1) and carried on a physical downlink control channel (PDCCH); and
a signal, a scheduling request (scheduling request, SR), an STC, or RMSI carried on a physical random access channel PRACH.

In the seventh aspect of embodiments of this application, composition modules of the communication apparatus may be further configured to perform the steps performed in the possible implementations of the third aspect. For details, refer to the third aspect. Details are not described herein again.

According to an eighth aspect of this application, a communication apparatus is provided. The apparatus is a first IAB node, or the apparatus is a component (for example, a processor, a chip, or a chip system) in the first IAB node, or the apparatus may be a logical module or software that can implement all or a part of the first IAB node. The apparatus includes a processing unit and a transceiver unit.

The processing unit is configured to determine a second time domain resource of an MT. The first IAB node includes a DU and the MT.

When the second time domain resource does not include a resource of a second signal, the processing unit is configured to determine a second frequency domain resource as an unavailable resource of the MT; or
when the second time domain resource includes a resource of a second signal, the processing unit is configured to determine a second frequency domain resource as an available resource of the MT.

In a possible implementation of the eighth aspect,
when the DU and the MT perform frequency division multiplexing on the second time domain resource, the second frequency domain resource is a guard band between a frequency domain resource of the DU and a frequency domain resource of the MT; or
when the DU and the MT do not perform frequency division multiplexing on the second time domain resource, the second frequency domain resource is an available frequency domain resource corresponding to the first time domain resource.

In a possible implementation of the eighth aspect,
the processing unit is specifically configured to receive first indication information from a parent node by using the transceiver unit. The first indication information indicates the second time domain resource of the MT.

In a possible implementation of the eighth aspect,
the processing unit is specifically configured to receive second indication information from the parent node by using the transceiver unit. The second indication information indicates a bandwidth size of a guard band between a frequency domain resource of the DU and a frequency domain resource of the MT when the DU and the MT perform frequency division multiplexing on the second time domain resource.

In a possible implementation of the eighth aspect, the guard band corresponds to a first resource multiplexing type, and the first resource multiplexing type includes at least one of the following:
an uplink frequency domain resource of the MT and an uplink resource of the DU are multiplexed;
an uplink frequency domain resource of the MT and a downlink resource of the DU are multiplexed;
a downlink frequency domain resource of the MT and an uplink resource of the DU are multiplexed; or
a downlink frequency domain resource of the MT and a downlink resource of the DU are multiplexed.

In a possible implementation of the eighth aspect, the second signal includes at least one of the following:
a synchronization signal block (SS/PBCH, SSB), and a type 0-physical uplink control channel common search space (TypeO-PDCCH CSS) or a periodic channel state information reference signal (CSI-RS) configured by a physical downlink control channel configured system information block 1 (pdcchConfigSIB 1) and carried on a physical downlink control channel (PDCCH); and
a signal, a scheduling request (scheduling request, SR), an STC, or RMSI carried on a physical random access channel PRACH.

In the eighth aspect of embodiments of this application, composition modules of the communication apparatus may be further configured to perform the steps performed in the possible implementations of the fourth aspect. For details, refer to the fourth aspect. Details are not described herein again.

According to a ninth aspect of embodiments of this application, a communication apparatus is provided. The communication apparatus includes a processor. The processor is coupled to a memory, the memory is configured to store a computer program or instructions, and the processor is configured to execute the computer program or the instructions in the memory, so that the method according to any one of the first aspect or the possible implementations of the first aspect is performed.

According to a tenth aspect of embodiments of this application, a communication apparatus is provided. The communication apparatus includes a processor. The processor is coupled to a memory, the memory is configured to store a computer program or instructions, and the processor is configured to execute the computer program or the instructions in the memory, so that the method according to any one of the second aspect or the possible implementations of the second aspect is performed.

According to an eleventh aspect of embodiments of this application, a communication apparatus is provided. The communication apparatus includes a processor. The processor is coupled to a memory, the memory is configured to store a computer program or instructions, and the processor is configured to execute the computer program or the instructions in the memory, so that the method according to any one of the third aspect or the possible implementations of the third aspect is performed.

According to a twelfth aspect of embodiments of this application, a communication apparatus is provided. The communication apparatus includes a processor. The processor is coupled to a memory, the memory is configured to store a computer program or instructions, and the processor is configured to execute the computer program or the instructions in the memory, so that the method according to any one of the fourth aspect or the possible implementations of the fourth aspect is performed.

According to a thirteenth aspect of embodiments of this application, a computer-readable storage medium is provided and stores one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect.

According to a fourteenth aspect of embodiments of this application, a computer program product (or referred to as a computer program) is provided and stores one or more computers. When the computer program product is executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect.

According to a fifteenth aspect of embodiments of this application, a chip system is provided. The chip system includes a processor, configured to support a communication apparatus in implementing a function according to any one of the first aspect or the possible implementations of the first aspect, or support a communication apparatus in implementing a function according to any one of the second aspect or the possible implementations of the second aspect, or support a communication apparatus in implementing a function according to any one of the third aspect or the possible implementations of the third aspect, or support a communication apparatus in implementing a function according to any one of the fourth aspect or the possible implementations of the fourth aspect. In a possible design, the chip system may further include a memory and the memory is configured to store program instructions and data that are necessary for the access network device. The chip system may include a chip, or may include a chip and another discrete component.

According to a sixteenth aspect of embodiments of this application, a communication system is provided. The communication system includes one or more communication apparatuses shown in the fifth aspect to the eighth aspect, or the communication system includes one or more communication apparatuses shown in the ninth aspect to the twelfth aspect.

For technical effects brought by any one of the fifth aspect, the ninth aspect, the thirteenth aspect, the fourteenth aspect, the fifteenth aspect, the sixteenth aspect, or the possible implementations of the fifth aspect, the ninth aspect, the thirteenth aspect, the fourteenth aspect, the fifteenth aspect, or the sixteenth aspect, refer to technical effects brought by the first aspect or the different possible implementations of the first aspect.

For technical effects brought by any one of the sixth aspect, the tenth aspect, the thirteenth aspect, the fourteenth aspect, the fifteenth aspect, the sixteenth aspect, or the possible implementations of the sixth aspect, the tenth aspect, the thirteenth aspect, the fourteenth aspect, the fifteenth aspect, or the sixteenth aspect, refer to technical effects brought by the second aspect or the different possible implementations of the second aspect.

For technical effects brought by any one of the seventh aspect, the eleventh aspect, the thirteenth aspect, the fourteenth aspect, the fifteenth aspect, the sixteenth aspect, or the possible implementations of the seventh aspect, the eleventh aspect, the thirteenth aspect, the fourteenth aspect, the fifteenth aspect, or the sixteenth aspect, refer to technical effects brought by the third aspect or the different possible implementations of the third aspect.

For technical effects brought by any one of the eighth aspect, the twelfth aspect, the thirteenth aspect, the fourteenth aspect, the fifteenth aspect, the sixteenth aspect, or the possible implementations of the eighth aspect, the twelfth aspect, the thirteenth aspect, the fourteenth aspect, the fifteenth aspect, or the sixteenth aspect, refer to technical effects brought by the fourth aspect or the different possible implementations of the fourth aspect.

It can be learned from the foregoing technical solution that the first IAB node includes the DU and the MT, and the first indication information received by the first IAB node from the parent node indicates the first parameter of the DU and the MT during resource multiplexing, so that the first IAB node determines the first parameter based on the first indication information. Then, the first IAB node transmits data based on the first parameter indicated when the DU and the MT perform resource multiplexing. The first parameter may be a resource multiplexing parameter (or referred to as a resource multiplexing condition, resource multiplexing capability information, or the like) of the DU and the MT in the first IAB node during resource multiplexing, so that the parent node flexibly indicates the resource multiplexing parameter to the first IAB node based on the first indication information, to better enable resource multiplexing transmission and improve resource utilization.

### BRIEF DESCRIPTION OF DRAWINGS

FIG. 1 is a schematic diagram of a communication system according to this application;
FIG. 2 is a schematic diagram of protocol stack interaction corresponding to a communication system according to this application;
FIG. 3 is another schematic diagram of protocol stack interaction corresponding to a communication system according to this application;
FIG. 4 is another schematic diagram of a communication system according to this application;
FIG. 5 is a schematic diagram of an IAB node according to this application;
FIG. 6a is another schematic diagram of a communication system according to this application;
FIG. 6b is another schematic diagram of a communication system according to this application;
FIG. 7a is a schematic diagram of resource occupation during resource multiplexing according to this application;
FIG. 7b is another schematic diagram of resource occupation during resource multiplexing according to this application;
FIG. 8 is another schematic diagram of a communication system according to this application;
FIG. 9 is another schematic diagram of resource occupation during resource multiplexing according to this application;
FIG. 10a is a schematic diagram of a communication method according to this application;
FIG. 10b is another schematic diagram of a communication method according to this application;
FIG. 10c is another schematic diagram of a communication method according to this application;
FIG. 10d is another schematic diagram of a communication method according to this application;
FIG. 10e is another schematic diagram of a communication method according to this application;
FIG. 11 is another schematic diagram of a communication method according to this application;
FIG. 12a is another schematic diagram of resource occupation during resource multiplexing according to this application;
FIG. 12b is another schematic diagram of resource occupation during resource multiplexing according to this application;
FIG. 13 is another schematic diagram of a communication method according to this application;
FIG. 14 is a schematic diagram of a communication apparatus according to this application; and
FIG. 15 is another schematic diagram of a communication apparatus according to this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". A term "and/or" in this specification describes only an association relationship between associated objects and indicates that there may be three relationships. For example, A and/or B may represent the following three cases: Only A exists, both A and B exist, and only B exists. In addition, in the descriptions of this application, "a plurality of means two or more than two unless otherwise specified. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. Some terms of embodiments of this application are first described, to facilitate understanding of a person skilled in the art.
1. Communication system: The communication system includes but is not limited to a narrowband internet of things (narrow band-internet of things, NB-IoT) system, a wireless local area network (wireless local access network, WLAN) system, an LTE system, a next-generation 5G mobile communication system, or a communication system after 5G, for example, NR or a device to device (device to device, D2D) communication system.
2. Network device: The network device is also referred to as a base station, and includes but is not limited to an evolved NodeB (evolved node base, eNB), a radio network controller (radio network controller, RNC), a NodeB (NodeB, NB), a base station controller (base station controller, BSC), a base transceiver station (base transceiver station, BTS), a home evolved NodeB (home evolved NodeB, or home NodeB, HNB), a baseband unit (baseband Unit, BBU), an evolved (evolved LTE, eLTE) base station, an NR base station (next generation NodeB, gNB), and the like.
3. Terminal device: The terminal device includes but is not limited to any one of user equipment (user equipment, UE), a mobile station, an access terminal, a subscriber unit, a subscriber station, a mobile station, a remote station, a remote terminal, a mobile device, a terminal, a wireless communication device, a user agent, a station (station, ST) in a wireless local area network (wireless local access network, WLAN), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a mobile station in a future 5G network, a terminal device in a future evolved public land mobile network (public land mobile network, PLMN) network, and the like.
4. A resource of a DU may include a frequency domain resource corresponding to the DU (for example, the frequency domain resource is at least one of a CC, a cell, and an RB set of the cell), and/or a time domain resource corresponding to the DU (for example, the time domain resource is at least one of a slot, a symbol, a subframe, and a frame).
5. A resource of an MT may include a frequency domain resource corresponding to the MT (for example, the frequency domain resource is at least one of a CC, a cell, an RB set of the cell, a bandwidth part (BWP), a physical resource block (PRB), and a common resource block (CRB)), and/or a time domain resource corresponding to the MT (for example, the time domain resource is at least one of a slot, a symbol, a subframe, and a frame).
6. Configuration and pre-configuration: Both configuration and pre-configuration are used in this application. Configuration means that a base station/parent node/donor node sends configuration information or values of some parameters to a terminal/child node by using a message or signaling, so that the terminal/the child node determines a communication parameter or a transmission resource based on the values or the information.
   Similar to configuration, pre-configuration may mean that a base station/parent node/donor node negotiates parameter information or a parameter value with a terminal device in advance, or may mean that a standard protocol specifies parameter information or a parameter value used by the base station/parent node/host node or the terminal/child node device, or may mean that the base station/parent node/donor node or the terminal/child node pre-stores parameter information or a parameter value. This is not limited in this application. Further, these values and parameters may be changed or updated.
7. Wireless backhaul node: The wireless backhaul node (or referred to as an IAB node) is configured to provide a wireless backhaul (backhaul) service for a node (for example, a terminal) wirelessly connected to the wireless backhaul node. The wireless backhaul service is a data and/or signaling backhaul service provided through a wireless backhaul link. The wireless backhaul node may be an IAB node, or may be a relay node (relay). This is not limited in the solutions of this application. The wireless backhaul node may be one of the foregoing base stations or terminal devices that have a forwarding function, or may be in an independent device form. In a network including the wireless backhaul node (where an IAB network is used as an example for description), the wireless backhaul node may provide a wireless access service for the terminal, and is connected to a donor base station (donor gNB) through the wireless backhaul link to transmit service data of a user.

For example, the wireless backhaul node may alternatively be a device such as customer premises equipment (customer premises equipment, CPE for short) or a residential gateway (residential gateway, RG for short). In this case, the method provided in embodiments of this application may further be applied to a home access (home access) scenario.

Further, concepts involved in an IAB system are briefly described below.

Link: A link is a path between two neighboring nodes on a path.

Access link: The access link is a link between a terminal device and a base station, a link between a terminal device and an IAB node, a link between a terminal device and a donor node, or a link between a terminal device and a donor DU. Alternatively, the access link includes a wireless link used when an IAB node serves as a common terminal device to communicate with a parent node of the IAB node. When serving as the common terminal device, the IAB node does not provide a backhaul service for any child node. The access link includes an uplink access link and a downlink access link. In this application, an access link of a terminal device is a wireless link. Therefore, the access link may also be referred to as a wireless access link.

Backhaul link: The backhaul link is a link between an IAB node and a parent node when the IAB node serves as a wireless backhaul node, or a link between an IAB node and a parent node. When serving as the wireless backhaul node, the IAB node provides a wireless backhaul service for a child node. The backhaul link includes an uplink backhaul link and a downlink backhaul link. In this application, a backhaul link between an IAB node and a parent node is a wireless link. Therefore, the backhaul link may also be referred to as a wireless backhaul link.

Parent node and child node: Each IAB node considers a neighboring node that provides a wireless access service and/or a wireless backhaul service for the IAB node as a parent node (parent node). Correspondingly, each IAB node may be considered as a child node (child node) of the parent node of the IAB node.

It should be understood that, in this application, a child node, a child IAB node, and a downstream node represent a same meaning and may be replaced with each other; and a parent node, an upstream node, and a parent IAB node represent a same meaning and may be replaced with each other.

Access IAB node: The access IAB node is an IAB node accessed by a terminal, or an IAB node that provides an access service for a terminal device.

Intermediate IAB node: The intermediate IAB node is an IAB node that provides a wireless backhaul service for another IAB node (for example, an access IAB node or another intermediate IAB node), or is an IAB node on a path between an access IAB node and an IAB donor.

F1 interface and a protocol layer of the F1 interface: The F1 interface is a logical interface between a DU part of an IAB node and a donor node (or a donor-CU). The F1 interface may also be referred to as an F1* interface, and supports a user plane and a control plane. The protocol layer of the F 1 interface is a communication protocol layer on the F1 interface.

For example, a user plane protocol layer of the F1 interface may include one or more of an IP layer, a UDP layer, and a GTP-U layer.

For example, a control plane protocol layer of the F1 interface may include one or more of an IP layer, an SCTP layer, and an F1AP layer.

Names of all nodes and messages in this application are merely names that are set for ease of description, and names in an actual network may be different. It should not be understood that names of various nodes and messages are limited in this application. On the contrary, any name having a function that is the same as or similar to a node or a message used in this application is considered as a method or an equivalent replacement of this application, and shall fall within the protection scope of this application. Details are not described below.

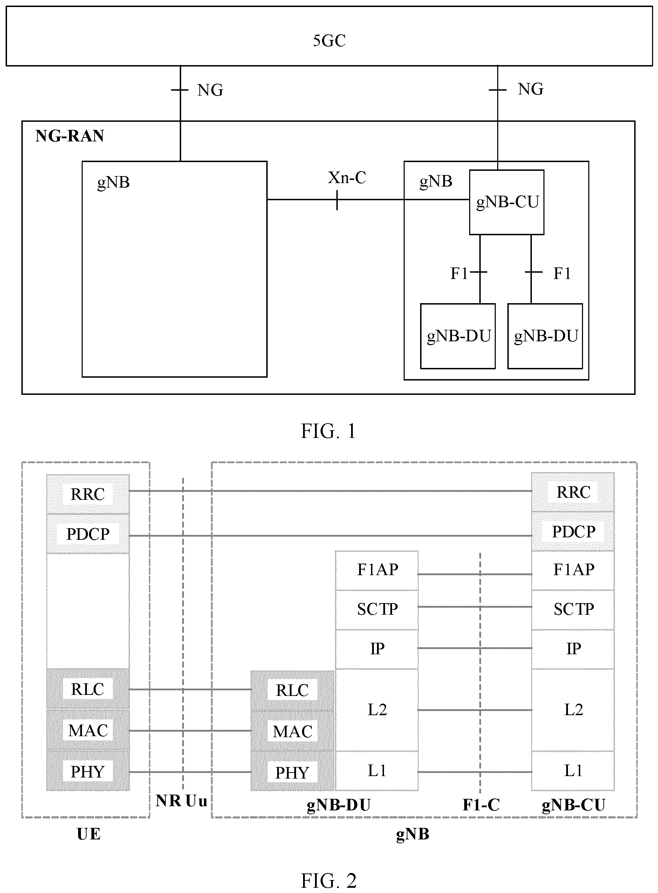

With reference to FIG. 1, an example in which a network device is a gNB is used. In a 3rd generation partnership project (3rd generation partnership project, 3GPP) Rel-15 NR, a gNB may use a distributed unit (central unit, CU)-central unit (distributed unit, DU) split architecture. To be specific, a gNB in a next generation radio access network (next generation radio access network, NG RAN) includes one gNB-CU and one or more gNB-DUs. One gNB-DU can be connected to only one gNB-CU, the gNB-CU is connected to the gNB-DU through an F1 interface, and the gNB-CU is connected to a 5GC (5G core network) through a next generation (next generation, NG) interface. This is shown in FIG. 1.

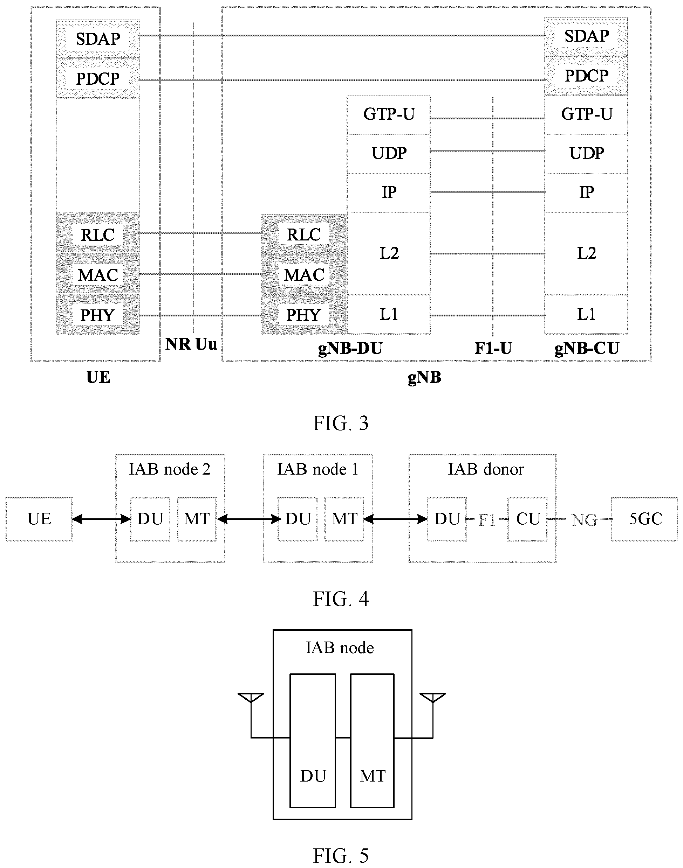

Further, for example, a terminal device is UE. The UE may access the gNB-CU through the gNB-DU shown in FIG. 1. To be specific, a peer physical (physical, PHY) layer/media access control (media access control, MAC) layer/radio link control (radio link control, RLC) layer function of the UE is located on the gNB-DU, and a peer packet data convergence protocol (packet data convergence protocol, PDCP) layer/service data adaptation protocol (Service Data Adaptation Protocol, SDAP) layer/radio resource control (radio resource control, RRC) layer function of the UE is located on the gNB-CU. Details are shown in FIG. 2 and FIG. 3.

With reference to FIG. 2, for control plane data, in an uplink (uplink, UL) direction, a gNB-DU encapsulates an RRC message generated by UE in an F1AP message of an F1 interface and sends the F1AP message to a gNB-CU. In a DL direction, the gNB-CU encapsulates an RRC message in an F1 interface application layer protocol (F1 application protocol, F1AP) message and sends the message to the gNB-DU, and the gNB-DU extracts the RRC message from the F1AP message and maps the RRC message to a signaling radio bearer (signaling radio bearer, SRB) (an SRB 0/an SRB 1/an SRB 2) corresponding to a Uu interface to send the RRC message to the UE.

With reference to FIG. 3, for user plane data, in a UL direction, a gNB-DU maps, to a corresponding general packet radio service tunneling protocol (general packet radio service tunneling protocol, GTP) tunnel, a UE data packet received from a data radio bearer (data radio bearer, DRB) of a Uu interface, to send the UE data packet to a gNB-CU. In a downlink (download, DL) direction, the gNB-CU maps a UE data packet to a corresponding GTP tunnel to send the UE data packet to the gNB-DU, and the gNB-DU extracts the UE data packet from the GTP tunnel, and maps the UE data packet to a DRB corresponding to the Uu interface to send the UE data packet to the UE.

In addition, two types of nodes, namely, an IAB node (which is referred to as an IAB node) and an IAB donor (which is referred to as an IAB donor node, or a donor IAB node), are further introduced in 3GPP Rel-15 integrated access and backhaul (integrated access and backhaul, IAB). The IAB donor may be a gNB.

The donor node (IAB donor) may be an access network element having a complete base station function, or may be in a form in which a central unit (central unit, CU) and a distributed unit (distributed unit, DU) are split, that is, the donor node includes a central unit of a donor base station and a distributed unit of the donor base station. In embodiments of this application, the central unit of the donor node is also referred to as an IAB donor CU (which is also referred to as a donor CU, or directly referred to as a CU). The distributed unit of the donor node is also referred to as an IAB donor DU (or referred to as a donor DU). The donor CU may alternatively be in a form in which a control plane (control plane, CP) (which is referred to as a CU-CP for short in embodiments of this application) and a user plane (user plane, UP) (which is referred to as a CU-UP for short in embodiments of this application) are split. For example, the CU may include one CU-CP and one or more CU-UPs.

With reference to FIG. 4, a two-hop data backhaul scenario (where backhaul is referred to as BH for short) is used as an example. In FIG. 4, an IAB network uses a CU-DU split architecture, to be specific, an IAB donor includes an IAB donor-CU (donor-CU for short) and an IAB donor-DU (donor-DU for short), and an IAB node includes an IAB node-MT (IAB-MT for short) and an IAB node-DU (IAB-DU for short). The IAB node-MT may also be referred to as an IAB node-UE (IAB-UE for short).

For the IAB donor, a function of the donor-DU is similar to that of a gNB-DU, and a function of the donor-CU is similar to that of a gNB-CU. For the IAB node, a function of the IAB-DU is similar to that of the gNB-DU, and the IAB-DU is configured to provide an access service for a child node of the IAB-DU. The child node of the IAB-DU may be UE, or may be another IAB node. The IAB-MT has a function of UE, and is configured to provide data backhaul for a child node of a co-site IAB-DU (that is, the IAB-DU and the IAB-MT belong to a same IAB node). Further, the IAB node may be further classified into an access IAB node and an intermediate IAB node. To be specific, an IAB node accessed by the UE is referred to as the access IAB node, and an IAB node on a path between the access IAB node and the IAB donor is referred to as the intermediate IAB node.

As shown in FIG. 4, UE accesses an IAB node 2. The IAB node 2 is referred to as an access IAB node of the UE (or a parent node of the UE), the UE is referred to as a child node of the IAB node 2, and a link between the UE and the IAB node 2 is referred to as an access link. An IAB node 1 is referred to as an intermediate IAB node. A parent node of the IAB node 1 is an IAB donor (where a child node of the IAB donor is the IAB node 1). A child node of the IAB node 1 is the IAB node 2 (where a parent node of the IAB node 2 is the IAB node 1). A link between the IAB node 1 and the IAB node 2 and a link between the IAB node 1 and the IAB donor are all referred to as backhaul links. A peer PHY layer, MAC layer, and RLC layer of the UE are located on the access IAB node (namely, an IAB 2-DU), and a peer PDCP layer, SDAP layer, and RRC layer of the UE are located on a donor-CU.

In the communication systems shown in FIG. 1 to FIG. 4, with continuous development of mobile communication technologies, spectrum resources are increasingly limited. To improve spectrum utilization, base stations will be deployed more densely in the future. In addition, dense deployment may further avoid coverage holes. In a conventional cellular network architecture, a base station establishes a connection to a core network through an optical fiber. However, deployment costs of optical fibers are very high in many scenarios. A wireless relay node (relay node, RN) establishes a connection to the core network by using a wireless backhaul link, so that some optical fiber deployment costs can be reduced.

Usually, a relay node establishes a wireless backhaul link to one or more parent nodes, and accesses a core network through the parent node. The parent node may control (for example, perform data scheduling, timing modulation, and power control on) the relay node by using a plurality of types of signaling. In addition, the relay node may provide a service for a plurality of child nodes. The parent node of the relay node may be a base station or another relay node. The child node of the relay node may be a terminal or another relay node. In some cases, the parent node may also be referred to as an upstream node, and the child node may also be referred to as a downstream node. In-band relay is a relay solution in which a backhaul link and an access link share a same band. Because no additional spectrum resource is used, the in-band relay has advantages such as high spectral efficiency and low deployment costs. The in-band relay is generally subject to a half-duplex constraint. Specifically, when receiving a downlink signal sent by the parent node of the relay node, the relay node cannot send a downlink signal to the child node of the relay node, and when receiving an uplink signal sent by the child node of the relay node, the relay node cannot send an uplink signal to the parent node of the relay node. An in-band relay solution of NR is referred to as integrated access and backhaul (IAB), and the relay node is referred to as an IAB node (IAB node).

When the IAB node works normally, resource multiplexing is performed on the access link and the backhaul link through time division multiplexing (time-division multiplexing, SDM), space division multiplexing (space-division multiplexing, TDM), or frequency division multiplexing (frequency-division multiplexing, FDM). A time division multiplexing scenario is used as an example. The backhaul link and the access link work at different moments. Therefore, the IAB node needs to switch between receiving and sending of the backhaul link and receiving and sending of the access link. When switching is performed on the backhaul link and the access link with no interval, in other words, when symbols of the access link and the backhaul link are consecutive, the IAB node has highest resource utilization. However, during implementation, due to various factors such as power amplifier on/off time, a transmission distance, and non-ideal synchronization, switching with no interval cannot be implemented on the backhaul link and the access link. In this case, the IAB node needs to determine a set of available/unavailable symbols of the backhaul link and the access link.

The IAB is divided into an MT and a DU. The MT is defined as a component similar to UE in terms of functions. In the IAB, the MT is referred to as a function that camps on the IAB node. Because the MT is similar to a function of common UE, it may be understood that the IAB node accesses a parent node/network through the MT. The DU is functionally relative to a CU. In 5G NR, functions of a base station are divided into two parts. This is CU-DU split. From a perspective of a protocol stack, the CU includes an RRC layer and a PDCP layer of an original LTE base station, and a DU includes an RLC layer, a MAC layer, and a PHY physical layer. In common 5G base station deployment, the CU and the DU may be physically connected through an optical fiber, and logically there is a specially defined F1 interface used for communication between the CU and the DU. From a function perspective, the CU is mainly responsible for radio resource control and configuration, cross-cell mobility management, bearer management, and the like, and the DU is mainly responsible for scheduling and physical signal generation and sending.

For example, an IAB node has a structure shown in FIG. 5. The MT is a UE function module of the IAB node. That is, the IAB node communicates with a parent node by using the MT. The DU is a base station function module of the IAB node. That is, the IAB node communicates with a child node and UE by using the DU. Both the MT and the DU of the IAB node have complete transceiver modules, and there is an interface between the MT and the DU. However, it should be noted that the MT and the DU are logical modules. In practice, the MT and the DU may share some submodules, for example, may share a transceiver antenna and a baseband processing module.

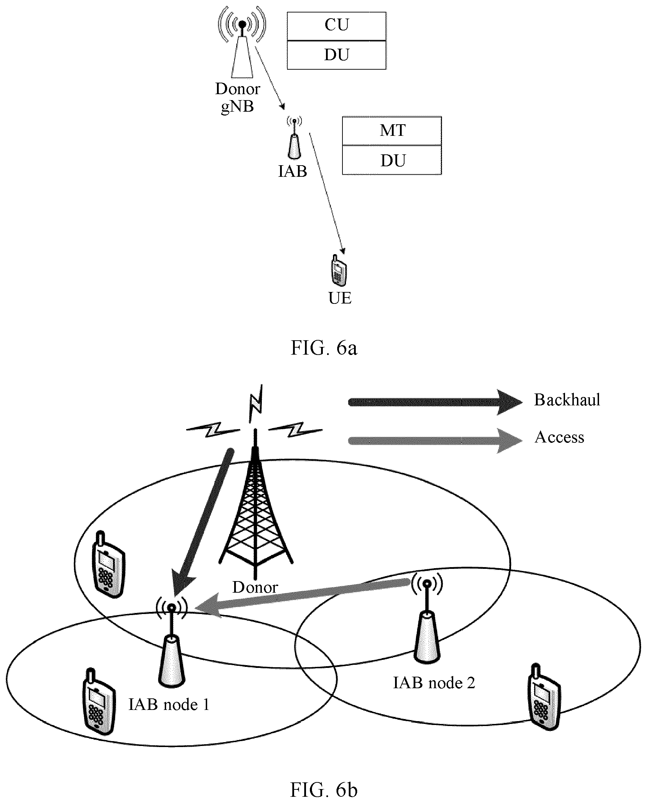

It should be noted that the IAB node is mainly applicable to a network side device, including signaling interaction between a relay device and a parent node of the relay device in NR, behavior of the relay device and the parent node, and the like. However, some embodiments may also be used for user equipment. A name of the relay device may be a relay node, a relay transmission reception point (relay transmission reception point, rTRP), an IAB node, or the like. A parent node of the relay node may be a gNB (including a gNB-DU, a gNB-CU, or the like) or another relay node. FIG. 6a simply shows the architecture and the protocol stack. For example, the CU sends a configuration (similar to a downlink transmission direction) to the DU. An F1-AP data packet generated by the CU is encapsulated into an IP packet, and is transmitted between a plurality of hop nodes of air interface. After the data packet arrives at a target IAB node, the data packet is processed at an MT adaptation layer of the target IAB, and then forwarded to a local IAB DU module for processing. Finally, the F1-AP data packet is parsed at the DU.

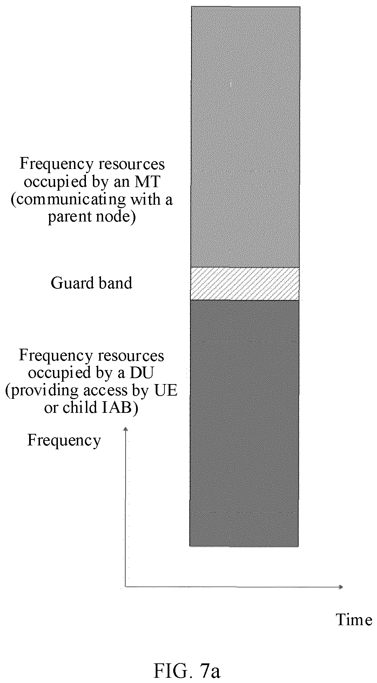

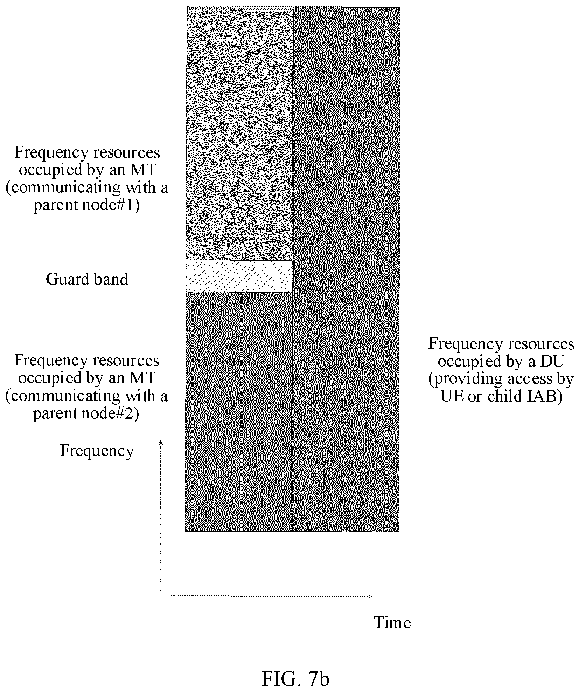

The following describes, by using implementation examples shown in FIG. 6b, FIG. 7a, and FIG. 7b, an implementation process of an IAB node having a DU and an MT in different resource multiplexing working modes.

FIG. 6b shows an implementation process of spatial multiplexing between the DU and the MT. To improve spectral efficiency, 3GPP considers an SDM/FDM scenario. In this new scenario, the IAB node may simultaneously receive a downlink signal sent by a parent node on a backhaul link and an uplink signal sent by the parent node and a child node/UE on an access link. FIG. 6b shows a space division receiving scenario of IAB. When directions of arrows in the foregoing figure are reversed, a space division sending scenario is shown (an IAB node 1 sends a signal to a donor and also sends a signal to a child node IAB node 2). In the IAB, a link for communicating with a parent node is usually referred to as a backhaul link, and a link for communicating with a child node or UE is usually referred to as an access link.

FIG. 7a and FIG. 7b show a process of frequency division multiplexing between the DU and the MT.

Frequency division multiplexing in the IAB scenario is mainly frequency division multiplexing between the IAB MT and the IAB DU. That is, the IAB MT and the IAB DU use different resources in frequency domain. Because the MT and the DU use a frequency division resource, mutual impact between signal receiving and sending of the MT and the DU is reduced. The "simultaneous working" specifically includes receiving and sending of the IAB MT and the IAB DU, and there are four scenarios in total in combinations of any two. Whether "simultaneous working" is supported depends on hardware implementation of a device.

For example, in FIG. 7a, the IAB MT and the IAB DU are frequency-divided. To be specific, in a same time unit (for example, a slot, a symbol, or a subframe), a frequency domain resource occupied by the MT (communicate with a parent node) and a frequency domain resource occupied by the DU (providing access by UE or a child node) are located in different frequency domain locations.

Optionally, there is a guard band (namely, a guard frequency band) between the frequency domain resource occupied by the MT and the frequency domain resource occupied by the DU.

In addition, in an IAB context, frequency division multiplexing in a broad sense further includes frequency division multiplexing in a dual connectivity scenario. Specifically, the IAB (MT) establishes connections to two devices at the same time. That is, the IAB has two parent nodes for backhaul. When the two parent nodes communicate with the IAB by using different frequency domain resources in frequency domain, this may also be referred to as frequency division multiplexing.

For example, in FIG. 7b, in a same time unit (for example, a slot, a symbol, or a subframe), a frequency domain resource occupied by an MT (that communicates with a parent node #1) and a frequency domain resource occupied by an MT (that communicates with a parent node #2) are located in different frequency domain locations, and there is a guard band (namely, a guard frequency band) between the two. In addition, in another time unit (for example, a slot, a symbol, or a subframe), a DU works and an MT does not work. That is, all frequency domain resources corresponding to the time unit are frequency domain resources occupied by the DU (providing access by UE or a child node).

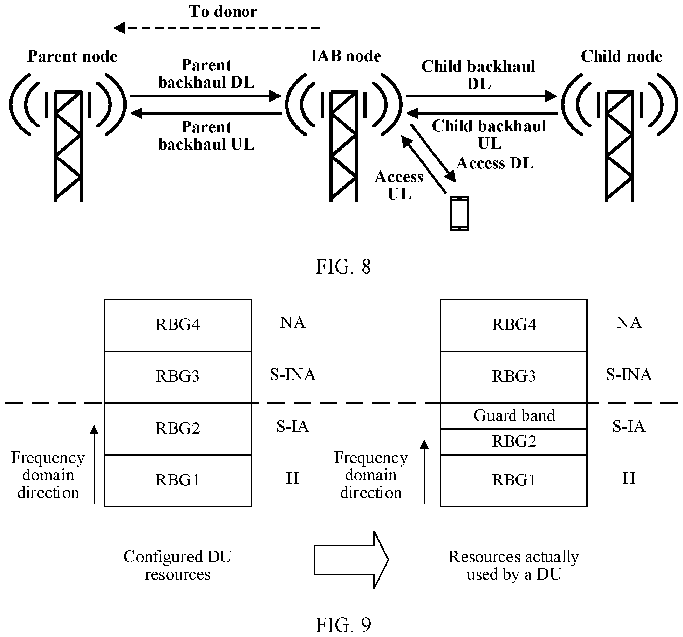

The following describes, by using an example shown in FIG. 8, resource types corresponding to an MT and a DU in an IAB node.

For example, the IAB node in NR may be divided into the MT and the DU. The MT is used by the IAB node to communicate with a parent node, and the DU is used by the IAB node to communicate with a child node. The parent node may be a common base station (for example, a gNB), or may be another IAB node. The child node may be UE, or may be another IAB node. A link for communication between the MT and the parent node is referred to as a parent backhaul link (parent BH link), a link for communication between the DU and the child IAB node is referred to as a child backhaul link (child BH link), and a link for communication between the DU and UE served by the DU is referred to as an access link (access link). In some cases, the child backhaul link is also referred to as an access link. The following shows an implementation of IAB resource allocation in NR.

For an MT resource, only a transmission direction may be configured for an MT resource of an IAB node, and includes three types: downlink (downlink, D), uplink (uplink, U), and flexible (Flexible, F). The flexible indicates that a transmission direction of the MT depends on a further indication of a parent node (usually, dynamically indicated by physical layer signaling). The three types are also currently supported by UE, and therefore may be indicated by using existing signaling. However, when resources are configured in a transmission direction of the UE (or referred to as a time division duplex (time division duplex, TDD) configuration), it is configured that a quantity of D resources of the UE appears at the beginning of a configuration periodicity by default, and a quantity of configured U resources appears at the end of the configuration periodicity by default. The IAB dedicated resources are reversed, that is, it is configured that a quantity of D resources appears at the end of a configuration periodicity by default, and a quantity of U resources appears at the beginning of the configuration periodicity by default.

For a DU resource, the DU resources of the IAB node may also be classified into three types: downlink (downlink, D), uplink (uplink, U), and flexible (Flexible, F), indicating three transmission directions. Further, DU uplink, downlink, and flexible resources may be further classified into two types: hard and soft.

DU hard resource: The DU hard resource indicates a resource that is always available to the DU. DU soft resource: Whether the DU soft resource is available to the DU depends on an indication of a parent node.

The DU has another unavailable (not available, NA) resource type, which indicates that the DU cannot use the resource.

In conclusion, the MT of the IAB node has three types of resources (D, F, and U), and the DU has seven types of resources (hard D, soft D, hard U, soft U, hard F, soft F, and NA).

Currently, in the Rel-16 IAB standard, the IAB supports a time division multiplexing working mode. That is, on a same time resource, only the MT or the DU works, and the MT or the DU may control all frequency domain resources. In the Rel-17 IAB standard, it is decided to further support frequency division multiplexing, to improve flexibility and resource utilization. Specifically, frequency division multiplexing requires that the MT and the DU use frequency domain resources that do not overlap. In actual use, considering factors such as a hardware capability, a guard band (guard band) needs to be reserved between the two resources. For implementation of the guard band, refer to the implementations shown in FIG. 7a and FIG. 7b. For an implementation process of resource multiplexing, there are currently the following two resource configuration manners: In a first implementation, a parent node of the IAB node dynamically provides conditions/parameters, to facilitate working in a multiplexing mode. For example, the parameters/conditions dynamically provided by the parent node include a quantity of guard symbols required for switching an IAB-DU multiplexing mode, a guard band required for FDM, a required timing mode, a required power control parameter, and a preferred TCI.

However, after the parent node dynamically provides the parameters and conditions of multiplexing transmission, the IAB node currently does not know when to perform resource multiplexing transmission, and whether the parameters/conditions provided by the parent node are always met, when the parameters/conditions provided by the parent node start to be met, or the like.

In a second implementation, to reduce unnecessary signaling overheads, the guard band is reserved on a resource of the DU. Receiving and sending of the DU are controllable by using an implementation. For example, when a relative power of the MT and the DU changes, the required guard band actually changes dynamically. In this case, the DU can flexibly adjust a size of the required guard band.

For example, configured DU resources are shown on the left side of FIG. 9. An H resource of the DU includes an RBG 1, an S-IA resource includes an RBG 2, an S-INA resource includes an RBG 3, and an NA resource includes an RBG 4. However, resources actually used by the DU are shown on the right side of FIG. 9. An H resource of the DU includes an RBG 1, an S-IA resource includes an RBG 2 and a part of a bandwidth of the RBG 2 is reserved as a guard band (the guard band is unavailable to the MT and the DU), an S-INA resource includes an RBG 3, and an NA resource includes an RBG 4.

However, the guard band on the DU is not always available. For example, when the DU needs to receive and send a cell-level key signal such as an SSB, a random access signal, or the like, to avoid impact on receiving and sending of these signals, the guard band cannot be reserved on a frequency domain resource of the DU. Similarly, when the MT also needs to receive and send an important signal, for example, a cell-level key signal such as an SSB or a random access signal, the guard band should not be reserved on the MT. Therefore, the guard band cannot be reserved on a frequency domain resource of the MT. As a result, some mechanisms need to be used for coordination to keep away from receiving and sending of important signals, so that the guard band is available without affecting basic communication.

To resolve the foregoing technical problem, this application provides a communication method and a communication apparatus, to resolve the foregoing technical problem by using a plurality of embodiments. The following provides detailed descriptions with reference to the accompanying drawings.

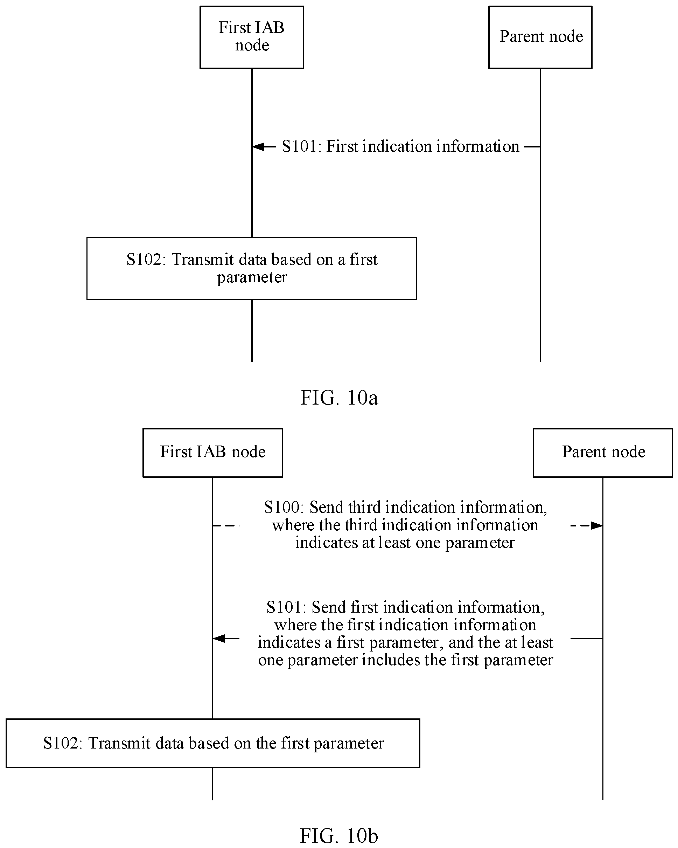

FIG. 10a is a schematic diagram of a communication method according to this application. The method includes the following steps.

S101: A parent node sends first indication information to a first IAB node.

In this embodiment, the parent node determines the first indication information, and sends the first indication information to the first IAB node in step S101. Correspondingly, the first IAB node receives the first indication information from the parent node in step S 101. The first IAB node includes a DU and an MT, and the first indication information indicates a first parameter of the DU and the MT during resource multiplexing.

It should be noted that the parent node may be an intermediate node (or referred to as a relay node) between a donor (donor) node and the first IAB node, or the parent node may be a donor node. This is not limited herein.

In a possible implementation, in step S101, the first parameter that is indicated by the first indication information and that is of the DU and the MT during resource multiplexing includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration information state identifier TCI state ID or a sounding reference signal resource index SRI corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal DMRS ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

The first parameter may include at least one of the foregoing plurality of pieces of information, or the first parameter may further include other information. This is not specifically limited herein.

In a possible implementation, before the first IAB node receives the first indication information from the parent node in step S101, the method may further include: The first IAB node sends third indication information to the parent node. The third indication information indicates at least one parameter required by the DU and the MT when a resource multiplexing mode is a first resource multiplexing mode. Specifically, before the first IAB node receives, from the parent node, the first indication information that indicates the first parameter of the DU and the MT during resource multiplexing in step S101, the first IAB node may further send, to the parent node, the third indication information that indicates at least one parameter required by the DU and the MT when the resource multiplexing mode is the first resource multiplexing mode. In this way, the parent node determines at least one parameter required by the first IAB when the resource multiplexing mode of the DU and the MT is the first resource multiplexing mode.

In addition, the at least one parameter indicated by the third indication information is a parameter required by the DU and the MT in the first IAB node when the resource multiplexing mode is the first resource multiplexing mode. The first resource multiplexing mode may include time division multiplexing, frequency division multiplexing, space division multiplexing, or the like. This is not limited herein.

Optionally, the third indication information is carried in a media access control control element (media access control control element, MAC CE), F1-AP interface signaling, uplink control information (uplink control information, UCI), or another message/signaling. This is not limited herein.

For example, when the first resource multiplexing mode is frequency division multiplexing, the first resource multiplexing mode may specifically indicate at least one of the following: The DU and the MT in the first IAB simultaneously receive data (DU_RX/MT_RX), the DU and the MT in the first IAB simultaneously send data (DU_TX/MT_TX), the DU in the first IAB receives data and the MT in the first IAB node sends data (DU_RX/MT_TX), and the MT in the first IAB node receives data and the DU in the first IAB sends data (DU_TX/MT_RX). This is not limited herein. Optionally, when the first resource multiplexing mode is one of the foregoing frequency division multiplexing modes, the at least one parameter is a parameter required by the first IAB corresponding to a transmission mode of the frequency division multiplexing mode. When the first resource multiplexing mode is a plurality of the foregoing frequency division multiplexing modes, transmission modes of the plurality of frequency division multiplexing modes each correspond to at least one different parameter. That is, the first IAB node reports at least one corresponding parameter for each resource multiplexing mode.

Optionally, when the first resource multiplexing mode is a plurality of the foregoing frequency division multiplexing modes, at least one parameter corresponding to transmission modes of the plurality of frequency division multiplexing modes may be the same. That is, the first IAB node reports a same required parameter for the transmission modes of the plurality of frequency division multiplexing modes.

It should be noted that the at least one required parameter may be expressed as at least one expected parameter, or expressed as at least one requested parameter, or expressed as at least one supported parameter.

Optionally, in a process in which the parent node determines the first parameter before step S101, the parent node may use the at least one parameter as one of determining bases for determining the first parameter.

In a possible implementation, when the first IAB node reports the at least one parameter by using the third indication information, there may be a plurality of implementations of the at least one parameter. The following separately describes the implementations.

Implementation 1: The at least one parameter includes the first parameter.

In an implementation example, some optional steps may be added to the implementation process shown in FIG. 10a, as shown in an implementation process shown in FIG. 10b.

Compared with the implementation process in FIG. 10a, a difference in the implementation process in FIG. 10b is that step S100 is added before step S101. The first IAB node sends the third indication information to the parent node in step S100. Correspondingly, the parent node receives, in step S100, the third indication information sent by the first IAB node. In addition, the third indication information indicates at least one parameter required by the DU and the MT in the first IAB node when the resource multiplexing mode is the first resource multiplexing mode.

In addition, in the implementation process in FIG. 10b, the first parameter sent by the parent node to the first IAB node in step S101 is a part of the at least one parameter. In other words, the at least one parameter sent by the first IAB node in step S100 includes the first parameter sent by the parent node in step S101.

Specifically, the at least one parameter indicated by the third indication information may include the first parameter indicated by the first indication information. The at least one parameter is a parameter required by the DU and the MT in the first IAB node when the resource multiplexing mode is the first resource multiplexing mode. The first parameter is a first parameter that is indicated by the parent node to the first IAB node and that is of the DU and the MT in the first IAB node during resource multiplexing. That is, the parent node may select a part or all of the at least one parameter reported by the first IAB node as the first parameter, so that the first parameter indicated by the parent node is a part or all of parameters required by the first IAB node, and the parent node can flexibly indicate (or adjust) first parameters of one or more first IAB nodes.

For example, after the first IAB node receives the first indication information sent by the parent node, the first IAB node determines the first parameter of the DU based on the first indication information in the multiplexing mode.

For example, the MT and the DU need to reserve a frequency domain resource as a guard band in a multiplexing mode. If the guard band needs to be reserved on a DU-side resource, after the first IAB node receives a feedback acknowledgment message (namely, the first indication information) of the third indication information, the DU in the first IAB node reserves a sufficient guard band based on the guard band indicated by the first parameter. If the first IAB node does not receive the feedback acknowledgment message (namely, the first indication information) of the third indication information, the DU in the first IAB node may consider to be in a TDM mode, and no guard band is required.

Optionally, after the first IAB node receives the feedback acknowledgment message (namely, the first indication information) of the third indication information, the IAB considers that a multiplexing capability condition is valid on DU hard or IA (the parent node schedules the IAB MT on the DU hard or IA resource). In this case, it needs to be ensured that a multiplexing transmission condition is met, for example, a guard band is reserved (that is, the guard band is reserved on the time resource).

For another example, the first IAB node considers that the multiplexing capability condition is valid only on some time domain resources explicitly specified by the parent node.

For another example, the parent node further specifies that the DU and the MT in the first IAB node perform resource multiplexing based on the first parameter in some time units (for example, a symbol, a slot, a subframe, or a frame).

Implementation 2: The at least one parameter is different from the first parameter.

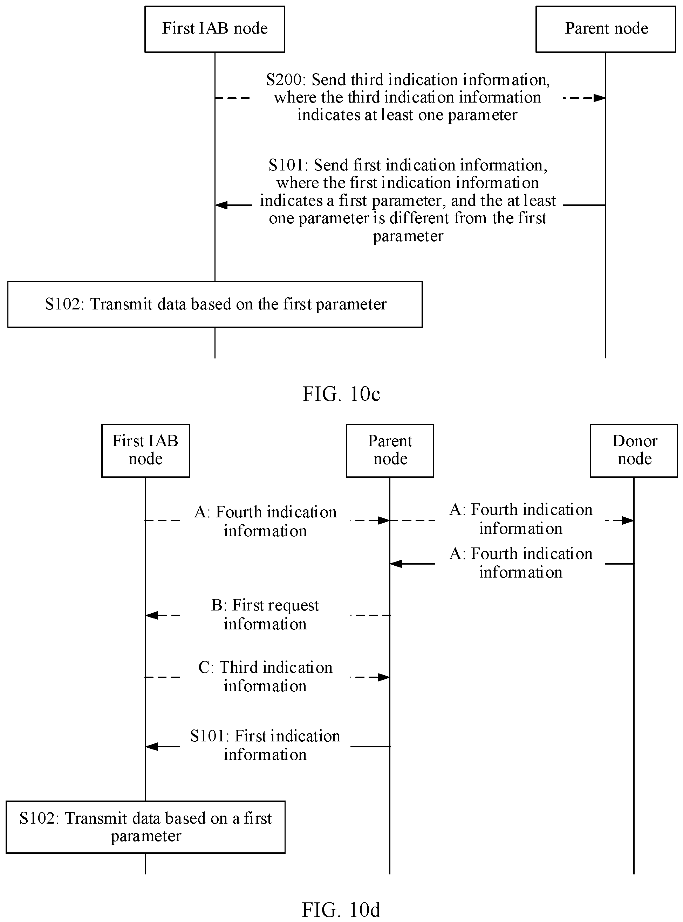

In an implementation example, some optional steps may be added to the implementation process shown in FIG. 10a, as shown in an implementation process shown in FIG. 10c.

Compared with the implementation process in FIG. 10a, a difference in the implementation process in FIG. 10c is that step S200 is added before step S101. The first IAB node sends the third indication information to the parent node in step S200. Correspondingly, the parent node receives, in step S200, the third indication information sent by the first IAB node. In addition, the third indication information indicates at least one parameter required by the DU and the MT in the first IAB node when the resource multiplexing mode is the first resource multiplexing mode.

In addition, in the implementation process in FIG. 10c, the first parameter sent by the parent node to the first IAB node in step S101 is different from the at least one parameter. In other words, the at least one parameter sent by the first IAB node in step S200 is different from the first parameter sent by the parent node in step S101.

Specifically, the at least one parameter indicated by the third indication information may be different from the first parameter indicated by the first indication information. The at least one parameter is a parameter required by the DU and the MT in the first IAB node when the resource multiplexing mode is the first resource multiplexing mode. The first parameter is a first parameter that is indicated by the parent node to the first IAB node and that is of the DU and the MT in the first IAB node during resource multiplexing. That is, the at least one parameter reported by the first IAB node is different from the first parameter indicated by the parent node, so that the parent node can flexibly indicate (or adjust) first parameters of one or more first IAB nodes.

For example, the parent node may modify the at least one parameter reported by the first IAB node to obtain the first parameter. For example, the first IAB node reports that an expected beam of the MT for the first resource multiplexing mode is A, and an unexpected beam is B. For another example, the modified first parameter fed back by the parent node is that a beam in the first resource multiplexing mode is B, and a downlink power is reduced by a value in decibels (dB) at the same time.

In addition, in Implementation 2, before the first IAB node sends the third indication information to the parent node, the method further includes: The first IAB node receives first request information from the parent node. The first request information is used to request capability information of the DU and the MT during resource multiplexing. Specifically, before sending the third indication information, the first IAB node may trigger, based on the first request information that is from the parent node and that is used to request the capability information of the DU and the MT during resource multiplexing, sending of the third indication information to the parent node, so that the at least one parameter is reported by the first IAB node based on the request information sent by the parent node.

Optionally, the first request information may specifically indicate capability information of requesting the DU and the MT to perform resource multiplexing in a resource multiplexing mode. In a possible implementation, the first parameter that is of the DU and the MT during resource multiplexing and that is indicated by the first indication information in step S101 is a corresponding parameter when the DU and the MT perform resource multiplexing and a resource multiplexing mode is a second resource multiplexing mode, and the first resource multiplexing mode is different from the second resource multiplexing mode. Specifically, the at least one parameter indicated by the third indication information sent by the first IAB node is a parameter corresponding to the first resource multiplexing mode, and the first parameter indicated by the first indication information sent by the parent node is a parameter corresponding to the second resource multiplexing mode. That is, a resource multiplexing mode corresponding to the at least one parameter reported by the first IAB node is different from a resource multiplexing mode corresponding to the first parameter indicated by the parent node, so that the parent node can flexibly indicate (or adjust) resource multiplexing modes of one or more first IAB nodes.

In a possible implementation, in step S101, the first parameter that is of the DU and the MT during resource multiplexing and that is indicated by the first indication information is a corresponding parameter when the DU and the MT perform resource multiplexing and the resource multiplexing mode is the first resource multiplexing mode. Specifically, the at least one parameter indicated by the third indication information sent by the first IAB node is a parameter corresponding to the first resource multiplexing mode, and the first parameter indicated by the first indication information sent by the parent node is also a parameter corresponding to the first resource multiplexing mode. That is, a resource multiplexing mode corresponding to the at least one parameter reported by the first IAB node is the same as a resource multiplexing mode corresponding to the first parameter indicated by the parent node, so that the resource multiplexing mode indicated by the parent node is a resource multiplexing mode corresponding to the parameter required by the first IAB node, and the parent node can flexibly indicate (or adjust) resource multiplexing modes of one or more first IAB nodes.

In a possible implementation, before the first IAB node receives the first indication information from the parent node in step S101, the method may further include: The first IAB node sends fourth indication information to the parent node. The fourth indication information indicates that the first IAB node supports at least one resource multiplexing mode, and the at least one resource multiplexing mode includes the first resource multiplexing mode. Specifically, before the first IAB node receives the first indication information from the parent node in step S101, the first IAB node may further send, to the parent node, the fourth indication information that indicates that the first IAB node supports the at least one resource multiplexing mode. In this way, the parent node determines, based on the fourth indication information reported by one or more first IAB nodes, the resource multiplexing mode supported by the first IAB node.

In an implementation example, some optional steps may be added to the implementation process shown in FIG. 10a, as shown in an implementation process shown in FIG. 10d.

Compared with the implementation process in FIG. 10a, a difference in the implementation process in FIG. 10d is that one or more of step A, step B, and step C are added before step S101.

For example, in the implementation process in FIG. 10d, when the first IAB node and the parent node perform step A, the first IAB node may send the fourth indication information to a donor node by using F1-AP interface signaling (or RRC signaling) through forwarding by the parent node. Further, the donor node forwards the fourth indication information to the parent node by using F 1 -AP interface signaling. The fourth indication information indicates that the first IAB node supports the at least one resource multiplexing mode, and the at least one resource multiplexing mode includes the first resource multiplexing mode.

It should be noted that, in step A shown in FIG. 10d, an example in which the parent node is not the donor node is used for description. If the parent node is the donor node, the first IAB node may directly send the fourth indication information to the parent node in step A without forwarding. For another example, in the implementation process in FIG. 10d, when the first IAB node and the parent node perform step C, the first IAB node sends the third indication information to the parent node in step C. Correspondingly, the parent node receives, in step C, the third indication information sent by the first IAB node. In addition, the third indication information indicates at least one parameter required by the DU and the MT in the first IAB node when the resource multiplexing mode is the first resource multiplexing mode.

In addition, in the implementation process in FIG. 10d, before step C, when the first IAB node and the parent node perform step B, the parent node sends the first request information to the first IAB node. Correspondingly, the first IAB node receives the first request information from the parent node. The first request information is used to request the capability information of the DU and the MT during resource multiplexing. In other words, the first request information is used to trigger the first IAB node to send the third indication information (indicating at least one parameter required by the DU and the MT in the first IAB node when the resource multiplexing mode is the first resource multiplexing mode) to the parent node.

Optionally, in a process of determining the first parameter in the first indication information, the parent node may use the fourth indication information as one of bases for determining the first parameter.

For example, the fourth indication information may be semi-static-based multiplexing capability information of the first IAB node (when the parent node is not the donor node, the first IAB node first reports the information to the donor node, and then the donor node forwards the information to the parent node of the first IAB node). Then, the parent node determines, based on the fourth indication information, whether the first IAB node needs to dynamically report a capability by using the third indication information.

For example, if the first IAB node reports "supported (supported)" for a resource multiplexing mode in the fourth indication information in a semi-static manner, it indicates that the first IAB node supports the resource multiplexing mode. When the DU and the MT in the first IAB node perform resource multiplexing in the resource multiplexing mode, a specific resource multiplexing parameter needs to be reported further based on the third indication information. Alternatively, if the first IAB node does not dynamically report any parameter based on the third indication information, it is considered that the resource multiplexing mode is always available.

For another example, if the first IAB node reports "not supported" (not supported) for a resource multiplexing mode in the fourth indication information in a semi-static manner, it indicates that the multiplexing mode is not supported (that is, not always available) when there is no constraint condition or is not supported in any condition. In this case, the first IAB node needs to report the at least one parameter based on the third indication information. Alternatively, the fourth indication information may further indicate that the multiplexing mode is unavailable in any condition.

S102: The first IAB node transmits data based on the first parameter.

In this embodiment, the first IAB node transmits data in step S102 based on the first parameter indicated by the first indication information received in step S101.

It should be noted that, a process in which the first IAB node transmits data based on the first parameter may include: The first IAB node transmits uplink data (including an uplink signal, uplink information, uplink signaling, and the like) based on the first parameter; and/or a process in which the first IAB node transmits data based on the first parameter may include: The first IAB node transmits downlink data (including a downlink signal, downlink information, downlink signaling, and the like) based on the first parameter.

In a possible implementation, a process in which the first IAB node transmits data based on the first parameter in step S102 specifically includes: The first IAB node transmits data based on the first parameter in a first transmission mode. The first transmission mode is a transmission mode in which data transmission of the DU and the MT is based on resource multiplexing. Specifically, after the first IAB node receives, from the parent node in step S102, the first parameter indicated when the DU and the MT perform resource multiplexing, the first IAB node may perform resource multiplexing transmission based on the first parameter. That is, the first IAB node transmits data based on the first parameter in the first transmission mode, and the first transmission mode is a transmission mode in which data transmission of the DU and the MT is based on resource multiplexing.

In a possible implementation, a process in which the first IAB node transmits data based on the first parameter in step S102 specifically includes: The first IAB node transmits data based on the first parameter in a second transmission mode. The second transmission mode is a transmission mode in which data transmission of the DU and the MT is not based on resource multiplexing. Specifically, after the first IAB node receives, from the parent node in step S102, the first parameter indicated when the DU and the MT perform resource multiplexing, the first IAB node may perform non-resource multiplexing transmission based on the first parameter. That is, the first IAB node transmits data based on the first parameter in the second transmission mode, and the second transmission mode is a transmission mode in which data transmission of the DU and the MT is not based on resource multiplexing.

In a possible implementation, before the first IAB node transmits data based on the first parameter in step S 102, the first IAB node may further determine whether the first parameter meets a preset condition; and if yes, the first IAB node transmits data based on the first parameter in the first transmission mode; or if no, the first IAB node transmits data based on the first parameter in the second transmission mode.

Optionally, that the first IAB node determines whether the first parameter meets a preset condition may include: The first IAB node determines whether a device capability (for example, a resource multiplexing capability during time division multiplexing or a resource multiplexing capability during frequency division multiplexing) of the first IAB node supports to perform resource multiplexing based on the first parameter; and if yes, the first IAB node transmits data based on the first parameter in the first transmission mode; or if no, the first IAB node transmits data based on the first parameter in the second transmission mode. Alternatively, that the first IAB node determines whether the first parameter meets a preset condition may include: The first IAB node determines, whether a threshold of a communication requirement parameter (for example, a channel occupancy ratio (channel occupancy ratio, CR), a channel busy ratio (channel busy ratio, CBR), a reference signal received power (reference signal received power, RSRP), a received signal strength indicator (received signal strength indicator, RSSI), a transmission delay, or transmission reliability) is met when resource multiplexing is performed based on the first parameter; and if yes, the first IAB node transmits data based on the first parameter in the first transmission mode; or if no, the first IAB node transmits data based on the first parameter in the second transmission mode. Alternatively, the preset condition may be another implementation. This is not limited herein.

Optionally, the preset condition may be preconfigured on the first IAB node, or may be determined by the first IAB node based on a configuration of the parent node. This is not limited herein.

In a possible implementation, in a process in which the first IAB node transmits data based on the first parameter in step S 102 (or after the first IAB node transmits data based on the first parameter in step S102), the method may further include: The first IAB node sends second indication information to the parent node. The second indication information indicates that data transmission of the DU and the MT is not based on resource multiplexing. Specifically, when the first IAB node determines that the first parameter does not meet the preset condition, the first IAB node may further transmit data based on the first parameter in the second transmission mode. In addition, the first IAB node may further send, to the parent node, the second indication information that indicates that data transmission of the DU and the MT is not based on resource multiplexing, so that the parent node determines a data transmission mode of the first IAB node.

In a possible implementation, after the first IAB node receives the first indication information from the parent node in step S101 (or in a process in which the first IAB node transmits data based on the first parameter in step S102, or after the first IAB node transmits data based on the first parameter in step S102), the method further includes: The first IAB node receives fifth indication information from the parent node. The fifth indication information indicates the DU and the MT to transmit data in a third resource multiplexing mode. The third resource multiplexing mode includes time division multiplexing of the DU and the MT; or the third resource multiplexing mode includes at least one of the following: The DU and the MT simultaneously receive data; the DU and the MT simultaneously send data; the DU receives data and the MT sends data; or the MT receives data and the DU sends data.

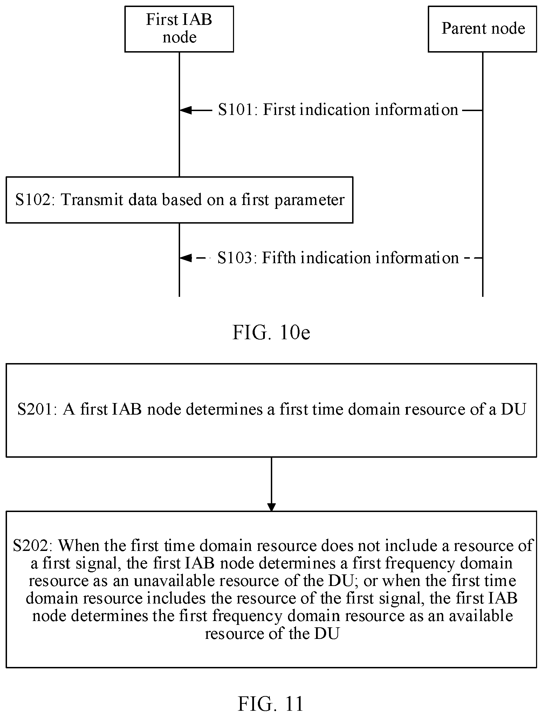

In an implementation example, some optional steps may be added to the implementation process shown in FIG. 10a, as shown in an implementation process shown in FIG. 10e.

Compared with the implementation process in FIG. 10a, a difference in the implementation process in FIG. 10e is that step S103 is added after step S101. Step S103 may be performed after step S 102, or may be performed before step S102. This is not limited herein.

In the implementation process in FIG. 10e, after the parent node sends the first indication information to the first IAB node in step S101, the parent node sends the fifth indication information to the first IAB node in step S103. Correspondingly, the first IAB node receives the fifth indication information from the parent node in step S103. The fifth indication information indicates the DU and the MT to transmit data in the third resource multiplexing mode. Specifically, after the first IAB node receives the first indication information from the parent node in step S101 (or in a process in which the first IAB node transmits data based on the first parameter in step S102, or after the first IAB node transmits data based on the first parameter in step S102), in a process in which the first IAB node transmits data based on the first parameter indicated by the first indication information, the parent node may send, to the first IAB node, the fifth indication information that indicates the DU and the MT to transmit data in the third resource multiplexing mode. Due to macro control or a change of a parameter such as communication quality or a communication requirement, the parent node may need to adjust the resource multiplexing mode of the first IAB node. Therefore, the parent node may indicate an adjustment result corresponding to the adjustment process by using the fifth indication information.

In a possible implementation, after the first IAB node receives the first indication information from the parent node, the method further includes: The first IAB node sends sixth indication information to the parent node. The sixth indication information indicates the DU and the MT to transmit data in the third resource multiplexing mode, and the third resource multiplexing mode includes time division multiplexing of the DU and the MT; or the third resource multiplexing mode includes at least one of the following: The DU and the MT simultaneously receive data; the DU and the MT simultaneously send data; the DU receives data and the MT sends data; or the MT receives data and the DU sends data.

Specifically, after the first IAB node receives the first indication information from the parent node in step S101, in a process in which the first IAB node transmits data based on the first parameter indicated by the first indication information, the first IAB node may send, to the parent node, the sixth indication information that indicates the DU and the MT to transmit data in the third resource multiplexing mode. Due to a change of a parameter such as communication quality or a communication requirement, the first IAB node may need to adjust the resource multiplexing mode of the first IAB node. Therefore, the first IAB node may indicate an adjustment result corresponding to the adjustment process by using the sixth indication information.

According to the foregoing technical solution, the first IAB node includes the DU and the MT, and the first indication information received by the first IAB node from the parent node indicates the first parameter of the DU and the MT during resource multiplexing, so that the first IAB node determines the first parameter based on the first indication information. Then, the first IAB node transmits data based on the first parameter indicated when the DU and the MT perform resource multiplexing. The first parameter may be a resource multiplexing parameter (or referred to as a resource multiplexing condition, resource multiplexing capability information, or the like) of the DU and the MT in the first IAB node during resource multiplexing, so that the parent node flexibly indicates the resource multiplexing parameter to the first IAB node based on the first indication information, to better enable resource multiplexing transmission and improve resource utilization. FIG. 11 is a schematic diagram of a communication method according to this application. The method includes the following steps.

S201: A first IAB node determines a first time domain resource of a DU.

In a possible implementation, a process in which the first IAB node determines the first time domain resource of the DU in step S201 specifically includes: The first IAB node receives first indication information from a parent node. The first indication information indicates the first time domain resource of the DU. Specifically, the first IAB node receives, from the parent node, the first indication information that indicates the first time domain resource of the DU, to determine the first time domain resource of the DU based on the first indication information. A specific implementation in which the first IAB node determines the first time domain resource of the DU is provided.

Optionally, the first IAB node may further receive frequency domain indication information from the parent node. The frequency domain indication information indicates that a part or all frequency domain resources corresponding to the first time domain resource are available resources of the DU.

Optionally, the first indication information and the frequency domain indication information are carried in a same message, or the first indication information and the frequency domain indication information are carried in different messages.

Optionally, the first IAB node may determine the first time domain resource in a preconfiguration manner, or may determine, in a preconfiguration manner, that a part or all frequency domain resources corresponding to the first time domain resource are available resources of the DU. This is not limited herein.

In a possible implementation, before (or after) step S201, the method further includes: The first IAB node receives second indication information from the parent node. The second indication information indicates a bandwidth size of a guard band between a frequency domain resource of the DU and a frequency domain resource of the MT when the DU and the MT perform frequency division multiplexing on the first time domain resource. Specifically, the first IAB node may further receive, from the parent node, the bandwidth size of the guard band between the frequency domain resource of the DU and the frequency domain resource of the MT when the DU and the MT perform frequency division multiplexing on the first time domain resource. Therefore, when the DU and the MT perform frequency division multiplexing on the first time domain resource, the first IAB node determines a bandwidth size of a first frequency domain resource based on the bandwidth size of the guard band.

Optionally, the second indication information may be carried in PHY signaling, or the second indication information may be carried in MAC layer signaling. This is not limited herein. Optionally, after receiving the second indication information of the parent node, the first IAB node may determine that the bandwidth size of the guard band takes effect after preset duration. The preset duration may be preconfigured on the first IAB node, or may be configured by the parent node for the first IAB node. This is not limited herein.

Optionally, the second indication information may further indicate bandwidth sizes of corresponding guard bands for different component carriers (component carrier, CC) used by the first IAB node. Alternatively, the indication is performed based on a combination of an MT CC and a DU cell that are potentially multiplexed. For example, an IAB MT CC (cell) #1 and an IAB DU cell #1 may be multiplexed, and an IAB MT CC (cell) #2 and an IAB DU cell #2 may be multiplexed. In this case, the second indication information separately indicates bandwidth sizes of guard bands in the two multiplexing combinations.

In a possible implementation, the guard band corresponds to a first resource multiplexing type, and the first resource multiplexing type includes at least one of the following: an uplink frequency domain resource of the MT and an uplink resource of the DU are multiplexed; or an uplink frequency domain resource of the MT and a downlink resource of the DU are multiplexed; or a downlink frequency domain resource of the MT and an uplink resource of the DU are multiplexed; or a downlink frequency domain resource of the MT and a downlink resource of the DU are multiplexed. Specifically, the guard band indicated by the second indication information may be a guard band corresponding to the at least one resource multiplexing type.

Optionally, the second indication information and the first indication information may be carried in a same message, or the second indication information and the first indication information may be carried in different messages. This is not limited herein.

S202: When the first time domain resource does not include a resource of a first signal, the first IAB node determines the first frequency domain resource as an unavailable resource of the DU; or when the first time domain resource includes the resource of the first signal, the first IAB node determines the first frequency domain resource as an available resource of the DU.

In a possible implementation, the first signal includes at least one of the following: a synchronization signal block, or referred to as a synchronization signal/broadcast signal block (synchronization signal/PBCH block, SS/PBCH block or SSB), a type 0-physical uplink control channel common search space (TypeO-PDCCH CSS) or a periodic channel state information reference signal (channel state information reference signal, CSI-RS) configured by a physical downlink control channel configured system information block 1 (pdcchConfigSIB 1) and carried on a physical downlink control channel (physical downlink control channel, PDCCH), and a signal, a scheduling request (scheduling request, SR), an STC, or RMSI carried on a physical random access channel (physical random access channel, PRACH).

Optionally, the first IAB may consider the resource that carries the first signal as a hard (hard, H) resource.

Specifically, because the guard band on the DU is not always available, when the DU needs to transmit the first signal on the first time domain resource, the first frequency domain resource is determined as an available resource of the DU, to ensure that the first signal is received and sent to some extent. When the DU does not need to transmit the first signal on the first time domain resource, the first frequency domain resource is determined as an unavailable resource of the DU. In this case, the DU should avoid a frequency domain resource of the MT as much as possible when transmitting data on the first time domain resource, to ensure, to some extent, that a signal receiving and sending process of the DU does not affect the MT.

In a possible implementation, when the DU and the MT in the first IAB perform frequency division multiplexing on the first time domain resource, the first IAB determines that the first frequency domain resource is a guard band between the frequency domain resource of the DU and the frequency domain resource of the MT in step S202. Alternatively, when the DU and the MT in the first IAB do not perform frequency division multiplexing on the first time domain resource, the first IAB determines that the first frequency domain resource is an available frequency domain resource corresponding to the first time domain resource in step S202. Specifically, when the DU and the MT in the first IAB node perform frequency division multiplexing on the first time domain resource, the first frequency domain resource needs to be reserved as a guard band between the frequency domain resource of the DU and the frequency domain resource of the MT, to avoid interference to (or conflict with) transmission of the MT or the DU. For example, when the first time domain resource is occupied by one of the DU and the MT, (a part or all) available frequency domain resources corresponding to the first time domain resource may be occupied by one of the DU and the MT, and impact on the other of the DU and the MT does not need to be considered.

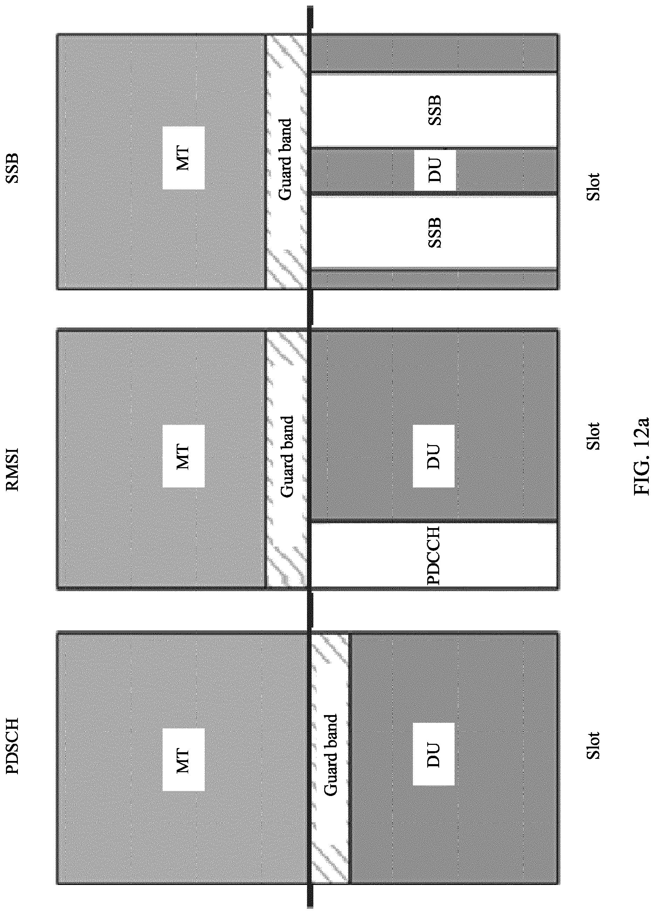

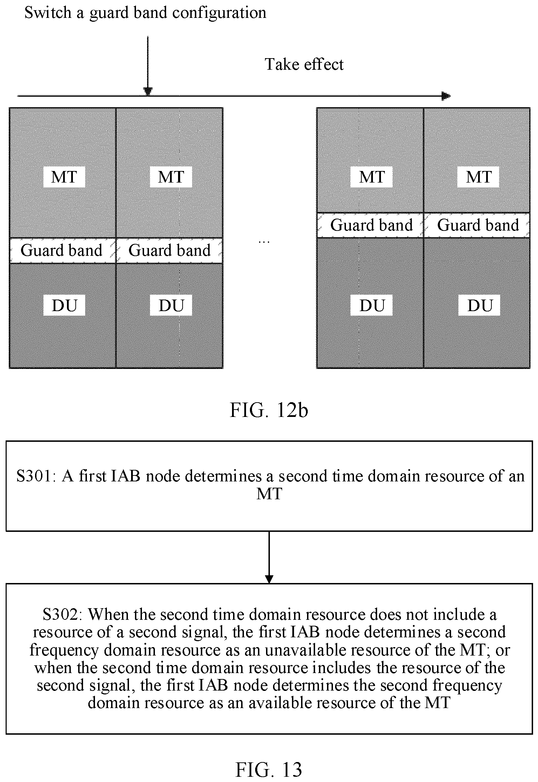

The following describes, by using examples shown in FIG. 12a and FIG. 12b, implementation of the first frequency band resource when the DU and the MT in the first IAB perform frequency division multiplexing on the first time domain resource.

For example, as shown in FIG. 12a, when a signal carried on the first time domain resource is not the first signal, for example, a physical downlink shared channel (physical downlink shared channel, PDSCH) in FIG. 12a, a frequency domain location of the first frequency domain resource (namely, a guard band (Guard band)) is located in a frequency domain resource of the DU, and the first frequency domain resource is an unavailable resource of the DU. When the signal carried on the first time domain resource is the first signal, for example, RMSI or an SSB in FIG. 12a, a frequency domain location of the first frequency domain resource (namely, a guard band (Guard band)) is located in a frequency domain resource of the MT, and the first frequency domain resource is an available resource of the DU. To ensure that the RMSI or the SSB can be successfully received and sent, the DU also considers the first frequency domain resource as an available resource.

For example, as shown in the left figure in FIG. 12b, before the second indication information takes effect, a frequency domain location of the guard band (Guard band) between the frequency domain resource of the MT and the frequency domain resource of the DU is located in the frequency domain resource of the DU. As shown in the right figure in FIG. 12b, before the second indication information takes effect, a frequency domain location of the guard band (Guard band) between the frequency domain resource of the MT and the frequency domain resource of the DU is located in the frequency domain resource of the MT.

According to the technical solutions shown in FIG. 11, FIG. 12a, and FIG. 12b, after the first IAB node determines the first time domain resource of the DU, the first IAB node may determine, based on whether the first time domain resource includes the resource of the first signal, whether the first frequency domain resource is an available resource of the DU. The first signal is an important signal that needs to be transmitted (received or sent) by the DU, for example, a cell-level key signal, an important signal used for access, or an important signal used for channel measurement.

When the first time domain resource does not include the resource of the first signal, that is, when the first IAB determines that the first signal does not need to be transmitted on the first time domain resource, the first IAB node determines the first frequency domain resource as an unavailable resource of the DU. The first IAB does not need to reserve the first frequency domain resource for the DU to transmit the first signal, so that the DU does not occupy the first frequency domain resource, and a signal to be transmitted by the MT can be carried on the first frequency domain resource, or the signal to be transmitted by the MT is not interfered by (or does not conflict with) using the first frequency domain resource by the DU.

Alternatively, when the first time domain resource includes the resource of the first signal, that is, when the first IAB determines that the first signal needs to be transmitted on the first time domain resource, the first IAB node determines the first frequency domain resource as an available resource of the DU. The first IAB reserves the first frequency domain resource for the DU to transmit the first signal, so that the first signal can be carried on the first frequency domain resource, or transmission of the first signal is not interfered by (or does not conflict with) using the first frequency domain resource by the MT.

FIG. 13 is a schematic diagram of a communication method according to this application. The method includes the following steps.

S301: A first IAB node determines a second time domain resource of an MT.

In a possible implementation, a process in which the first IAB node determines the second time domain resource of the MT in step S301 includes: The first IAB node receives first indication information from a parent node. The first indication information indicates the second time domain resource of the MT. Specifically, in step S201, the first IAB node receives, from the parent node, first indication information that indicates the second time domain resource of the MT, to determine the second time domain resource of the MT based on the first indication information. A specific implementation in which the first IAB node determines the second time domain resource of the MT is provided.

Optionally, the first IAB node may further receive frequency domain indication information from the parent node. The frequency domain indication information indicates that a part or all frequency domain resources corresponding to the second time domain resource are available resources of the MT.

Optionally, the first indication information and the frequency domain indication information are carried in a same message, or the first indication information and the frequency domain indication information are carried in different messages.

Optionally, the first IAB node may determine the second time domain resource in a preconfiguration manner, or may determine, in a preconfiguration manner, that a part or all frequency domain resources corresponding to the second time domain resource are available resources of the MT. This is not limited herein.

In a possible implementation, before (or after) step S201, the method further includes: The first IAB node receives second indication information from the parent node. The second indication information indicates a bandwidth size of a guard band between a frequency domain resource of the DU and a frequency domain resource of the MT when the DU and the MT perform frequency division multiplexing on the second time domain resource. Specifically, the first IAB node may further receive, from the parent node, the bandwidth size of the guard band between the frequency domain resource of the DU and the frequency domain resource of the MT when the DU and the MT perform frequency division multiplexing on the second time domain resource. Therefore, when the DU and the MT perform frequency division multiplexing on the second time domain resource, the first IAB node determines a bandwidth size of a second frequency domain resource based on the bandwidth size of the guard band.

In a possible implementation, the guard band corresponds to a first resource multiplexing type, and the first resource multiplexing type includes at least one of the following: an uplink frequency domain resource of the MT and an uplink resource of the DU are multiplexed; or an uplink frequency domain resource of the MT and a downlink resource of the DU are multiplexed; or a downlink frequency domain resource of the MT and an uplink resource of the DU are multiplexed; or a downlink frequency domain resource of the MT and a downlink resource of the DU are multiplexed. Specifically, the guard band indicated by the second indication information may be a guard band corresponding to the at least one resource multiplexing type.

Optionally, the second indication information and the first indication information may be carried in a same message, or the second indication information and the first indication information may be carried in different messages. This is not limited herein.

S302: When the second time domain resource does not include a resource of a second signal, the first IAB node determines the second frequency domain resource as an unavailable resource of the MT; or when the second time domain resource includes the resource of the second signal, the first IAB node determines the second frequency domain resource as an available resource of the MT. In a possible implementation, the second signal includes at least one of the following: an SSB, a Type0-PDCCH CSS or a periodic CSI-RS configured by a pdcchConfigSIB1 and carried on a PDCCH, and a signal, an SR, an STC, or RMSI carried on a PRACH.

Because the guard band on the MT is not always available, when the MT needs to transmit the second signal on the second time domain resource, the second frequency domain resource is determined as an available resource of the MT, to ensure, to some extent, that the second signal is received and sent. When the MT does not need to transmit the second signal on the second time domain resource, the second frequency domain resource is determined as an unavailable resource of the MT. In this case, the MT should avoid a frequency domain resource of the DU as much as possible when transmitting data on the second time domain resource, to ensure, to some extent, that a signal receiving and sending process of the MT does not affect the DU.

In a possible implementation, when the DU and the MT in the first IAB perform frequency division multiplexing on the second time domain resource, the first IAB determines the second frequency domain resource as a guard band between the frequency domain resource of the DU and the frequency domain resource of the MT in step S302. Alternatively, when the DU and the MT in the first IAB do not perform frequency division multiplexing on the second time domain resource, the first IAB determines the second frequency domain resource as an available frequency domain resource corresponding to the second time domain resource in step S302. Specifically, when the DU and the MT in the first IAB node perform frequency division multiplexing on the second time domain resource, the second frequency domain resource needs to be reserved as a guard band between the frequency domain resource of the DU and the frequency domain resource of the MT, to avoid interference to (or conflict with) transmission of the MT or the DU. For example, when the second time domain resource is occupied by one of the DU and the MT, (a part or all) available frequency domain resources corresponding to the second time domain resource may be occupied by one of the DU and the MT, and impact on the other of the DU and the MT does not need to be considered.

According to the technical solution in FIG. 13, after the first IAB node determines the second time domain resource of the MT, the first IAB node may determine, based on whether the second time domain resource includes the resource of the second signal, whether the second frequency domain resource is an available resource of the MT. The second signal is an important signal that needs to be transmitted (received or sent) by the MT, for example, a cell-level key signal, an important signal used for access, or an important signal used for channel measurement.

When the second time domain resource does not include the resource of the second signal, that is, when the first IAB determines that the second signal does not need to be transmitted on the second time domain resource, the first IAB node determines the second frequency domain resource as an unavailable resource of the MT. The second IAB does not need to reserve the second frequency domain resource for the MT to transmit the second signal, so that the MT does not occupy the second frequency domain resource, and a signal to be transmitted by the DU can be carried on the second frequency domain resource, or the signal to be transmitted by the DU is not interfered by (or does not conflict with) using the second frequency domain resource by the MT.

Alternatively, when the second time domain resource includes the resource of the second signal, that is, when the first IAB determines that the second signal needs to be transmitted on the second time domain resource, the first IAB node determines the second frequency domain resource as an available resource of the MT. The first IAB reserves the second frequency domain resource for the MT to transmit the second signal, so that the second signal can be carried on the second frequency domain resource, or transmission of the second signal is not interfered by (or does not conflict with) using the second frequency domain resource by the DU.

The foregoing describes embodiments of this application from a method perspective. The following describes a communication apparatus in an embodiment of this application from a specific apparatus implementation perspective.

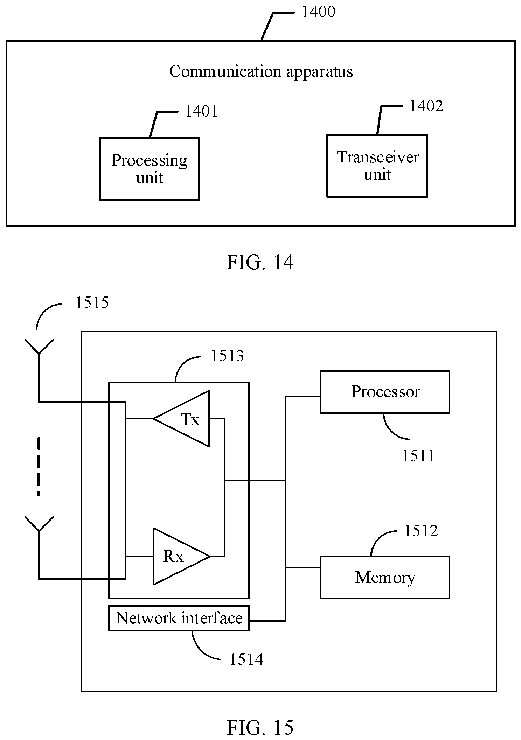

Refer to FIG. 14. An embodiment of this application provides a communication apparatus 1400.

Specifically, the communication apparatus 1400 includes a processing unit 1401 and a transceiver unit 1402.

In an implementation, when the communication apparatus 1400 is configured to implement the functions corresponding to the first IAB node in any one of the embodiments shown in FIG. 10a to FIG. 10e, implementations of the processing unit 1401 and the transceiver unit 1402 in the communication apparatus 1400 include the following processes.

The transceiver unit is configured to receive first indication information from a parent node. The first integrated backhaul and access IAB node includes a distributed unit DU and a mobile terminal MT, and the first indication information indicates a first parameter of the DU and the MT during resource multiplexing.

The processing unit is configured to determine the first parameter.

The transceiver unit is configured to transmit data based on the first parameter.

In a possible implementation, that the transceiver unit is configured to transmit data based on the first parameter includes:
The transceiver unit is configured to transmit data based on the first parameter in a first transmission mode. The first transmission mode is a transmission mode in which data transmission of the DU and the MT is based on resource multiplexing.

In a possible implementation, that the transceiver unit is configured to transmit data based on the first parameter includes:
The transceiver unit is configured to transmit data based on the first parameter in a second transmission mode. The second transmission mode is a transmission mode in which data transmission of the DU and the MT is not based on resource multiplexing.

In a possible implementation, the transceiver unit is further configured to:
send second indication information to the parent node, where the second indication information indicates that data transmission of the DU and the MT is not based on resource multiplexing.

In a possible implementation,
the transceiver unit is further configured to send third indication information to the parent node. The third indication information indicates at least one parameter required by the DU and the MT when a resource multiplexing mode is a first resource multiplexing mode.

In a possible implementation, the at least one parameter includes the first parameter.

In a possible implementation, the at least one parameter is different from the first parameter.

In a possible implementation, the first parameter is a corresponding parameter when the DU and the MT perform resource multiplexing and a resource multiplexing mode is a second resource multiplexing mode, and the first resource multiplexing mode is different from the second resource multiplexing mode.

In a possible implementation, the first parameter is a corresponding parameter when the DU and the MT perform resource multiplexing and a resource multiplexing mode is the first resource multiplexing mode.

In a possible implementation,
the transceiver unit is further configured to receive first request information from the parent node. The first request information is used to request capability information of the DU and the MT during resource multiplexing.

In a possible implementation,
the transceiver unit is further configured to send fourth indication information to the parent node. The fourth indication information indicates that the first IAB node supports at least one resource multiplexing mode, and the at least one resource multiplexing mode includes the first resource multiplexing mode.

In a possible implementation, the first parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration information state identifier TCI state ID or a sounding reference signal resource index SRI corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal DMRS ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

In a possible implementation,
the transceiver unit is further configured to receive fifth indication information from the parent node. The fifth indication information indicates the DU and the MT to transmit data in a third resource multiplexing mode.

The third resource multiplexing mode includes time division multiplexing of the DU and the MT; or
the third resource multiplexing mode includes at least one of the following:
the DU and the MT simultaneously receive data;
the DU and the MT simultaneously send data;
the DU receives data and the MT sends data; or
the MT receives data and the DU sends data.

In a possible implementation,
the transceiver unit is further configured to send sixth indication information to the parent node. The sixth indication information indicates the DU and the MT to transmit data in a third resource multiplexing mode.

The third resource multiplexing mode includes time division multiplexing of the DU and the MT; or
the third resource multiplexing mode includes at least one of the following:
the DU and the MT simultaneously receive data;
the DU and the MT simultaneously send data;
the DU receives data and the MT sends data; or
the MT receives data and the DU sends data.

It should be noted that, for content such as an information execution process of the units in the communication apparatus 1400, refer to the descriptions corresponding to the first IAB node in the foregoing method embodiments of this application. Details are not described herein again.

In an implementation, when the communication apparatus 1400 is configured to implement the functions corresponding to the parent node in any one of the embodiments shown in FIG. 10a to FIG. 10e, implementations of the processing unit 1401 and the transceiver unit 1402 in the communication apparatus 1400 include the following processes.

The processing unit is configured to determine first indication information.

The transceiver unit is configured to send the first indication information to the first IAB node. The first IAB node includes a distributed unit DU and a mobile terminal MT, and the first indication information indicates a first parameter of the DU and the MT during resource multiplexing.

In a possible implementation,
the transceiver unit is further configured to receive second indication information from the first IAB node. The second indication information indicates that data transmission of the DU and the MT is not based on resource multiplexing.

In a possible implementation,
the transceiver unit is further configured to receive third indication information from the first IAB node. The third indication information indicates at least one parameter required by the DU and the MT when a resource multiplexing mode is a first resource multiplexing mode.

In a possible implementation, the at least one parameter includes the first parameter.

In a possible implementation, the at least one parameter is different from the first parameter.

In a possible implementation, the first parameter is a corresponding parameter when the DU and the MT perform resource multiplexing and a resource multiplexing mode is a second resource multiplexing mode, and the first resource multiplexing mode is different from the second resource multiplexing mode.

In a possible implementation, the first parameter is a corresponding parameter when the DU and the MT perform resource multiplexing and a resource multiplexing mode is the first resource multiplexing mode.

In a possible implementation,
the transceiver unit is further configured to send first request information to the first IAB node. The first request information is used to request capability information of the DU and the MT during resource multiplexing.

In a possible implementation,
the transceiver unit is further configured to receive fourth indication information from the first IAB node. The fourth indication information indicates that the first IAB node supports at least one resource multiplexing mode, and the at least one resource multiplexing mode includes the first resource multiplexing mode.

In a possible implementation, the first parameter includes at least one of the following:
first information, indicating whether the DU and the MT perform frequency division multiplexing during resource multiplexing;
second information, indicating whether a guard band is included between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration information state identifier TCI state ID or a sounding reference signal resource index SRI corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal DMRS ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT. Alternatively,
in a possible implementation,
the transceiver unit is further configured to send fifth indication information to the parent node. The fifth indication information indicates the DU and the MT to transmit data in a third resource multiplexing mode.

The third resource multiplexing mode includes time division multiplexing of the DU and the MT; or
the third resource multiplexing mode includes at least one of the following:
the DU and the MT simultaneously receive data;
the DU and the MT simultaneously send data;
the DU receives data and the MT sends data; or
the MT receives data and the DU sends data.

In a possible implementation, after the parent node sends the first indication information to the first IAB node, the apparatus further includes:
The parent node receives fifth indication information from the first IAB node. The fifth indication information indicates the DU and the MT to transmit data in a third resource multiplexing mode. The third resource multiplexing mode includes time division multiplexing of the DU and the MT; or
the third resource multiplexing mode includes at least one of the following:
the DU and the MT simultaneously receive data;
the DU and the MT simultaneously send data;
the DU receives data and the MT sends data; or
the MT receives data and the DU sends data.

It should be noted that, for content such as an information execution process of the units in the communication apparatus 1400, refer to the descriptions corresponding to the parent node in the foregoing method embodiments of this application. Details are not described herein again.

In an implementation, when the communication apparatus 1400 is configured to implement the functions corresponding to the first IAB node in any one of the embodiments shown in FIG. 11, implementations of the processing unit 1401 and the transceiver unit 1402 in the communication apparatus 1400 include the following processes.

The processing unit is configured to determine a first time domain resource of a DU. The first IAB node includes the DU and an MT.

When the first time domain resource does not include a resource of a first signal, the processing unit is configured to determine a first frequency domain resource as an unavailable resource of the DU; or
when the first time domain resource includes the resource of the first signal, the processing unit is configured to determine the first frequency domain resource as an available resource of the DU.

In a possible implementation,
when the DU and the MT perform frequency division multiplexing on the first time domain resource, the first frequency domain resource is a guard band between a frequency domain resource of the DU and a frequency domain resource of the MT; or
when the DU and the MT do not perform frequency division multiplexing on the first time domain resource, the first frequency domain resource is an available frequency domain resource corresponding to the first time domain resource.

In a possible implementation,
the processing unit is specifically configured to receive first indication information from a parent node by using the transceiver unit. The first indication information indicates the first time domain resource of the DU.

In a possible implementation,
the processing unit is specifically configured to receive second indication information from the parent node by using the transceiver unit. The second indication information indicates a bandwidth size of a guard band between a frequency domain resource of the DU and a frequency domain resource of the MT when the DU and the MT perform frequency division multiplexing on the first time domain resource.

In a possible implementation, the guard band corresponds to a first resource multiplexing type, and the first resource multiplexing type includes at least one of the following:
an uplink frequency domain resource of the MT and an uplink resource of the DU are multiplexed;
an uplink frequency domain resource of the MT and a downlink resource of the DU are multiplexed;
a downlink frequency domain resource of the MT and an uplink resource of the DU are multiplexed; or
a downlink frequency domain resource of the MT and a downlink resource of the DU are multiplexed.

In a possible implementation, the first signal includes at least one of the following:
a synchronization signal block (SS/PBCH, SSB), and a type 0-physical uplink control channel common search space (Type0-PDCCH CSS) or a periodic channel state information reference signal (CSI-RS) configured by a physical downlink control channel configured system information block 1 (pdcchConfigSIB1) and carried on a physical downlink control channel (PDCCH); and
a signal, a scheduling request (scheduling request, SR), an STC, or RMSI carried on a physical random access channel PRACH.

It should be noted that, for content such as an information execution process of the units in the communication apparatus 1400, refer to the descriptions corresponding to the first IAB node in the foregoing method embodiments of this application. Details are not described herein again.

In an implementation, when the communication apparatus 1400 is configured to implement the functions corresponding to the first IAB node in any one of the embodiments shown in FIG. 13, implementations of the processing unit 1401 and the transceiver unit 1402 in the communication apparatus 1400 include the following processes.

The processing unit is configured to determine a second time domain resource of an MT. The first IAB node includes a DU and the MT.

When the second time domain resource does not include a resource of a second signal, the processing unit is configured to determine a second frequency domain resource as an unavailable resource of the MT; or
when the second time domain resource includes a resource of a second signal, the processing unit is configured to determine a second frequency domain resource as an available resource of the MT.

In a possible implementation,
when the DU and the MT perform frequency division multiplexing on the second time domain resource, the second frequency domain resource is a guard band between a frequency domain resource of the DU and a frequency domain resource of the MT; or
when the DU and the MT do not perform frequency division multiplexing on the second time domain resource, the second frequency domain resource is an available frequency domain resource corresponding to the first time domain resource.

In a possible implementation,
the processing unit is specifically configured to receive first indication information from a parent node by using the transceiver unit. The first indication information indicates the second time domain resource of the MT.

In a possible implementation,
the processing unit is specifically configured to receive second indication information from the parent node by using the transceiver unit. The second indication information indicates a bandwidth size of a guard band between a frequency domain resource of the DU and a frequency domain resource of the MT when the DU and the MT perform frequency division multiplexing on the second time domain resource.

In a possible implementation, the guard band corresponds to a first resource multiplexing type, and the first resource multiplexing type includes at least one of the following:
an uplink frequency domain resource of the MT and an uplink resource of the DU are multiplexed;
an uplink frequency domain resource of the MT and a downlink resource of the DU are multiplexed;
a downlink frequency domain resource of the MT and an uplink resource of the DU are multiplexed; or
a downlink frequency domain resource of the MT and a downlink resource of the DU are multiplexed.

In a possible implementation, the second signal includes at least one of the following:
a synchronization signal block (SS/PBCH, SSB), and a type 0-physical uplink control channel common search space (TypeO-PDCCH CSS) or a periodic channel state information reference signal (CSI-RS) configured by a physical downlink control channel configured system information block 1 (pdcchConfigSIB 1) and carried on a physical downlink control channel (PDCCH); and
a signal, a scheduling request (scheduling request, SR), an STC, or RMSI carried on a physical random access channel PRACH.

It should be noted that, for content such as an information execution process of the units in the communication apparatus 1400, refer to the descriptions corresponding to the first IAB node in the foregoing method embodiments of this application. Details are not described herein again. FIG. 15 is a schematic diagram of a structure of a communication apparatus in the foregoing embodiments according to an embodiment of this application. The communication apparatus may specifically perform a method implemented by the first IAB node or the parent node in the foregoing embodiments. For a structure of the communication apparatus, refer to the structure shown in FIG. 15.

The communication apparatus includes at least one processor 1511, at least one memory 1512, at least one transceiver 1513, at least one network interface 1514, and one or more antennas 1515. The processor 1511, the memory 1512, the transceiver 1513, and the network interface 1514 are connected, for example, connected through a bus. In this embodiment of this application, the connection may include various interfaces, transmission lines, buses, or the like. This is not limited in this embodiment. The antenna 1515 is connected to the transceiver 1513. The network interface 1514 is configured to enable the communication apparatus to be connected to another communication device through a communication link. For example, the network interface 1514 may include a network interface, for example, an S1 interface, between the communication apparatus and a core network device. The network interface may include a network interface, for example, an X2 or Xn interface, between the communication apparatus and another network device (for example, another access network device or a core network device).

The processor 1511 is mainly configured to process a communication protocol and communication data, control the entire communication apparatus, execute a software program, and process data of the software program, for example, is configured to support the communication apparatus in performing actions described in the embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1511 in FIG. 15. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program. The processor executes the software program to implement a baseband processing function.

The memory is mainly configured to store the software program and data. The memory 1512 may exist independently, and is connected to the processor 1511. Optionally, the memory 1512 may alternatively be integrated with the processor 1511, for example, integrated into a chip. The memory 1512 can store program code for executing the technical solutions in embodiments of this application, and the processor 1511 controls the execution. Various types of computer program code that are executed may also be considered as drivers of the processor 1511.

FIG. 15 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or an independent storage element. This is not limited in this embodiment of this application.

The transceiver 1513 may be configured to support receiving or sending of a radio frequency signal between the communication apparatus and the terminal. The transceiver 1513 may be connected to the antenna 1515. The transceiver 1513 includes a transmitter Tx and a receiver Rx. Specifically, the one or more antennas 1515 may receive a radio frequency signal. The receiver Rx of the transceiver 1513 is configured to: receive the radio frequency signal from the antenna, convert the radio frequency signal into a digital baseband signal or a digital intermediate frequency signal, and provide the digital baseband signal or the digital intermediate frequency signal to the processor 1511, so that the processor 1511 further processes the digital baseband signal or the digital intermediate frequency signal, for example, performs demodulation processing and decoding processing. In addition, the transmitter Tx of the transceiver 1513 is further configured to: receive a modulated digital baseband signal or digital intermediate frequency signal from the processor 1511, convert the modulated digital baseband signal or digital intermediate frequency signal into a radio frequency signal, and send the radio frequency signal through the one or more antennas 1515. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as digital signals.

The transceiver may also be referred to as a transceiver unit, a transceiver, a transceiver apparatus, or the like. Optionally, a component in the transceiver unit for implementing a receiving function may be considered as a receiving unit. A component in the transceiver unit for implementing a sending function may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitter, a transmitting circuit, or the like.

It should be noted that the communication apparatus shown in FIG. 15 may be specifically configured to implement the steps implemented by the communication apparatus in the foregoing corresponding method embodiments, and implement technical effects corresponding to the communication apparatus. For a specific implementation of the communication apparatus shown in FIG. 15, refer to the descriptions in the foregoing corresponding method embodiments. Details are not described herein again.

An embodiment of this application further provides a computer-readable storage medium that stores one or more computer-executable instructions. When the computer-executable instruction is executed by a processor, the processor performs the method implemented by the communication apparatus, for example, the method implemented by the first IAB node or the parent node.

An embodiment of this application further provides a computer program product (or referred to as a computer program) that stores one or more computers. When the computer program product is executed by a processor, the processor performs the method implemented by the communication apparatus, for example, the method implemented by the first IAB node or the parent node.

An embodiment of this application further provides a chip system. The chip system includes a processor, configured to support a communication apparatus in implementing the method implemented by the communication apparatus, for example, the method implemented by the first IAB node or the parent node. In a possible design, the chip system may further include a memory, and the memory is configured to store program instructions and data that are necessary for the communication apparatus. The chip system may include a chip, or may include a chip and another discrete component.

An embodiment of this application further provides a communication system. The communication system includes the foregoing communication apparatuses, for example, the first IAB node and the parent node.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc.

## Claims

1. A communication method, comprising:
receiving, by a first integrated access and backhaul IAB node, first indication information from a parent node, wherein the first IAB node comprises a distributed unit DU and a mobile terminal MT, and the first indication information indicates a first parameter of the DU and the MT during resource multiplexing; and
transmitting, by the first IAB node, data based on the first parameter.

2. The method according to claim 1, wherein the transmitting, by the first IAB node, data based on the first parameter comprises:
transmitting, by the first IAB node, data based on the first parameter in a first transmission mode, wherein the first transmission mode is a transmission mode in which data transmission of the DU and the MT is based on resource multiplexing.

3. The method according to claim 1, wherein the transmitting, by the first IAB node, data based on the first parameter comprises:
transmitting, by the first IAB node, data based on the first parameter in a second transmission mode, wherein the second transmission mode is a transmission mode in which data transmission of the DU and the MT is not based on resource multiplexing.

4. The method according to claim 3, wherein the method further comprises:
sending, by the first IAB node, second indication information to the parent node, wherein the second indication information indicates that data transmission of the DU and the MT is not based on resource multiplexing.

5. The method according to any one of claims 1 to 4, wherein before the receiving, by a first IAB node, first indication information from a parent node, the method further comprises:
sending, by the first IAB node, third indication information to the parent node, wherein the third indication information indicates at least one parameter required by the DU and the MT when a resource multiplexing mode is a first resource multiplexing mode.

6. The method according to claim 5, wherein the at least one parameter comprises the first parameter.

7. The method according to claim 5, wherein the at least one parameter is different from the first parameter.

8. The method according to any one of claims 5 to 7, wherein the first parameter is a corresponding parameter when the DU and the MT perform resource multiplexing and a resource multiplexing mode is a second resource multiplexing mode, and the first resource multiplexing mode is different from the second resource multiplexing mode.

9. The method according to any one of claims 5 to 7, wherein the first parameter is a corresponding parameter when the DU and the MT perform resource multiplexing and a resource multiplexing mode is the first resource multiplexing mode.

10. The method according to any one of claims 5 to 9, wherein before the sending, by the first IAB node, third indication information to the parent node, the method further comprises:
receiving, by the first IAB node, first request information from the parent node, wherein the first request information is used to request capability information of the DU and the MT during resource multiplexing.

11. The method according to claim 10, wherein before the receiving, by a first IAB node, first indication information from a parent node, the method further comprises:
sending, by the first IAB node, fourth indication information to the parent node, wherein the fourth indication information indicates that the first IAB node supports at least one resource multiplexing mode, and the at least one resource multiplexing mode comprises the first resource multiplexing mode.

12. The method according to any one of claims 1 to 11, wherein the first parameter comprises at least one of the following:
first information, indicating whether the DU and the MT perform frequency division multiplexing during resource multiplexing;
second information, indicating whether a guard band is comprised between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration information state identifier TCI state ID or a sounding reference signal resource index SRI corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information of the MT;
ninth information, indicating a maximum quantity of downlink demodulation reference signal DMRS ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

13. The method according to any one of claims 1 to 12, wherein after the receiving, by a first IAB node, first indication information from a parent node, the method further comprises:
receiving, by the first IAB node, fifth indication information from the parent node, wherein the fifth indication information indicates the DU and the MT to transmit data in a third resource multiplexing mode, wherein
the third resource multiplexing mode comprises time division multiplexing of the DU and the MT; or
the third resource multiplexing mode comprises at least one of the following:
the DU and the MT simultaneously receive data;
the DU and the MT simultaneously send data;
the DU receives data and the MT sends data; or
the MT receives data and the DU sends data.

14. A communication apparatus, comprising a processing unit and a transceiver unit, wherein
the transceiver unit is configured to receive first indication information from a parent node, wherein a first integrated backhaul and access IAB node comprises a distributed unit DU and a mobile terminal MT, and the first indication information indicates a first parameter of the DU and the MT during resource multiplexing;
the processing unit is configured to determine the first parameter; and
the transceiver unit is configured to transmit data based on the first parameter.

15. The apparatus according to claim 14, wherein that the transceiver unit is configured to transmit data based on the first parameter comprises:
the transceiver unit is configured to transmit data based on the first parameter in a first transmission mode, wherein the first transmission mode is a transmission mode in which data transmission of the DU and the MT is based on resource multiplexing.

16. The apparatus according to claim 14, wherein that the transceiver unit is configured to transmit data based on the first parameter comprises:
the transceiver unit is configured to transmit data based on the first parameter in a second transmission mode, wherein the second transmission mode is a transmission mode in which data transmission of the DU and the MT is not based on resource multiplexing.

17. The apparatus according to claim 16, wherein the transceiver unit is further configured to:
send second indication information to the parent node, wherein the second indication information indicates that data transmission of the DU and the MT is not based on resource multiplexing.

18. The apparatus according to any one of claims 14 to 17, wherein
the transceiver unit is further configured to send third indication information to the parent node, wherein the third indication information indicates at least one parameter required by the DU and the MT when a resource multiplexing mode is a first resource multiplexing mode.

19. The apparatus according to claim 18, wherein the at least one parameter comprises the first parameter.

20. The apparatus according to claim 18, wherein the at least one parameter is different from the first parameter.

21. The apparatus according to any one of claims 18 to 20, wherein the first parameter is a corresponding parameter when the DU and the MT perform resource multiplexing and a resource multiplexing mode is a second resource multiplexing mode, and the first resource multiplexing mode is different from the second resource multiplexing mode.

22. The apparatus according to any one of claims 18 to 20, wherein the first parameter is a corresponding parameter when the DU and the MT perform resource multiplexing and a resource multiplexing mode is the first resource multiplexing mode.

23. The apparatus according to any one of claims 18 to 22, wherein
the transceiver unit is further configured to receive first request information from the parent node, wherein the first request information is used to request capability information of the DU and the MT during resource multiplexing.

24. The apparatus according to claim 23, wherein
the transceiver unit is further configured to send fourth indication information to the parent node, wherein the fourth indication information indicates that the first IAB node supports at least one resource multiplexing mode, and the at least one resource multiplexing mode comprises the first resource multiplexing mode.

25. The apparatus according to any one of claims 14 to 24, wherein the first parameter comprises at least one of the following:
first information, indicating whether the DU and the MT perform frequency division multiplexing during resource multiplexing;
second information, indicating whether a guard band is comprised between a frequency domain resource of the DU and a frequency domain resource of the MT when the DU and the MT perform frequency division multiplexing;
third information, indicating a bandwidth size of the guard band between the frequency domain resource of the DU and the frequency domain resource of the MT when the DU and the MT perform frequency division multiplexing;
fourth information, indicating a quantity of guard symbols between a time domain resource of the DU and a time domain resource of the MT when the DU and the MT perform frequency division multiplexing;
fifth information, indicating a transmission configuration information state identifier TCI state ID or a sounding reference signal resource index SRI corresponding to an unexpected beam set of the first IAB node;
sixth information, indicating a quantity of data streams received by the first IAB node;
seventh information, indicating a quantity of data streams sent by the first IAB node;
eighth information, indicating downlink receive power information expected by the MT;
ninth information, indicating a maximum quantity of downlink demodulation reference signal DMRS ports of the MT;
tenth information, indicating a maximum quantity of uplink DMRS ports of the MT;
eleventh information, indicating a timing mode of uplink scheduling of the MT;
twelfth information, indicating a TCI state ID or an SRI corresponding to an uplink beam supported by the MT; or
thirteenth information, indicating a TCI state ID corresponding to a downlink beam supported by the MT.

26. The apparatus according to any one of claims 14 to 25, wherein
the transceiver unit is further configured to receive fifth indication information from the parent node, wherein the fifth indication information indicates the DU and the MT to transmit data in a third resource multiplexing mode, wherein
the third resource multiplexing mode comprises time division multiplexing of the DU and the MT; or
the third resource multiplexing mode comprises at least one of the following:
the DU and the MT simultaneously receive data;
the DU and the MT simultaneously send data;
the DU receives data and the MT sends data; or
the MT receives data and the DU sends data.

27. A communication apparatus, comprising a processor, wherein the processor is coupled to a memory, the memory is configured to store a computer program or instructions, and the processor is configured to execute the computer program or the instructions in the memory, so that the communication apparatus performs the communication method according to any one of claims 1 to 13.

28. A computer-readable storage medium, wherein the storage medium is configured to store a computer program or instructions, and when the computer program or the instructions are executed, the computer performs the communication method according to any one of claims 1 to 13.
